(19) Europäisches Patentamt
European Patent Office
Office européen des brevets

(11) EP 3 985 071 A1

# (12) EUROPEAN PATENT APPLICATION

published in accordance with Art. 153(4) EPC

(43) Date of publication:
**20.04.2022 Bulletin 2022/16**

(21) Application number: **20821592.1**

(22) Date of filing: **26.05.2020**

(51) International Patent Classification (IPC):
***C09B 19/02*** (2006.01) ***C09B 29/20*** (2006.01)
***C09B 29/33*** (2006.01) ***C09B 47/04*** (2006.01)
***C09B 47/10*** (2006.01) ***C09B 48/00*** (2006.01)
***C09C 1/00*** (2006.01) ***C09C 3/10*** (2006.01)
***C09D 11/03*** (2014.01) ***C09D 11/037*** (2014.01)
***C09D 11/32*** (2014.01) ***C09B 57/00*** (2006.01)
***C09B 57/12*** (2006.01) ***C09B 67/08*** (2006.01)
***C09B 67/20*** (2006.01) ***C09B 67/46*** (2006.01)

(52) Cooperative Patent Classification (CPC):
**C09B 67/0013; C09C 3/10; C09D 5/028; C09D 11/03; C09D 11/037; C09D 11/32**

(86) International application number:
**PCT/JP2020/020769**

(87) International publication number:
**WO 2020/250670 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2019 JP 2019110947**

(71) Applicants:
- **Toyo Ink SC Holdings Co., Ltd.**
**Tokyo 104-8377 (JP)**
- **TOYOCOLOR CO., LTD.**
**Tokyo, 104-8381 (JP)**

(72) Inventors:
- **AOTANI Tomoyuki**
**Tokyo 104-8381 (JP)**
- **SUZUKI Tomohiko**
**Tokyo 104-8381 (JP)**

(74) Representative: **Becker Kurig & Partner Patentanwälte mbB**
**Bavariastraße 7**
**80336 München (DE)**

## (54) COATED COLORANT, COLORING COMPOSITION, AND COATED COLORANT MANUFACTURING METHOD

(57) A purpose of the present invention is to provide a coated colorant and a coloring composition that have superior dispersion stability, high compatibility with binder resins, low viscosity after being made into ink, good preservation stability, and good film gloss value. A coated colorant having a resin (P) that coats a surface of a colorant, wherein the resin (P) includes a colorant adsorption group-including monomer unit, a maleic acid (anhydride) monomer unit, and a (meth)aryl monomer unit, and the colorant adsorption group-including monomer unit includes at least one of an a -olefin unit and a ring-including monomer unit.

EP 3 985 071 A1

## Description

[Technical Field]

The present invention relates to a coated colorant and a colorant composition containing the same.

[Background Art]

Pigments and dyes are widely used as colorants of printing inks, inks for ink jetting, paints, and the like. Among these, pigments (and dyes in some cases) of colorants used in inks for ink jetting, for example, inks for water-based ink jetting are contained in a state of being dispersed in a water-soluble solvent.

In an ink jet recording method, compatibility between jetting stability of stably jetting an ink from a nozzle, and stable dispersion of particles of a colorant and redispersibility of an ink in order to form a clear image is required.

Patent Literature 1 discloses a coloring composition in which a colorant, and a dispersant containing a maleic acid anhydride unit and an $\alpha$-olefin unit are dispersed by a bead mill.

[Reference List]

[Patent Literature]

Patent Literature 1: Japanese Patent Laid-Open No. H11-246813

[Summary of Invention]

[Technical Problem]

However, in conventional coloring compositions, because a dispersant is partially adsorbed on a colorant, the dispersant is likely to be removed from the colorant, and there is a problem of lowering of dispersion stability of the colorant over time. In addition, when these colorants are used as inks, a method, in which a colorant dispersion in which a colorant is dispersed at a high concentration is previously produced, and the colorant dispersion is let-down with a binder resin to form an ink, is performed. However, there are a problem of poor compatibility with a binder resin depending on the type of colorant, which makes it impossible to form paint, an ink, and the like, and a problem of a high viscosity of the obtained ink and a low film gloss value.

An objective of the present invention is to provide a coated colorant and a coloring composition that have superior dispersion stability, high compatibility with binder resins, low viscosity after being made into an ink, good preservation stability, and a good film gloss value.

[Solution to Problem]

A coated colorant of the present invention is a coated colorant in which a surface of a colorant is coated with a resin (P),

the resin (P) contains a colorant adsorption group-containing monomer unit, a maleic acid (anhydride) unit, and a (meth)allyl monomer unit, and
the colorant adsorption group-containing monomer unit contains at least one of an $\alpha$-olefin unit and a ring-containing monomer unit.

[Advantageous Effects of Invention]

According to the above-mentioned present invention, it is possible to provide a coated colorant and a coloring composition that have superior dispersion stability, high compatibility with binder resins, low viscosity after being made into an ink, good preservation stability, and a good film gloss value.

[Description of Embodiments]

First, the terms used in the present specification will be defined. "C.I." means a color index (C.I.). The monomer and the monomer are ethylenically unsaturated group-containing monomers. The (poly)alkyleneoxy group includes both a polyalkyleneoxy group and an alkyleneoxy group. The alkyleneoxy group is an ethyleneoxy group, a propyleneoxy

group, a butyleneoxy group, and the like, for example. The unit in the maleic acid (anhydride) unit means one of repeating units constituting a polymer obtained by polymerizing a maleic acid (anhydride) monomer. The same applies to the other monomer units. The dispersant is a compound used to disperse a pre-refined colorant. The coated colorant is a colorant obtained by refining a colorant together with a resin and coating at least a part of the surface with the resin.

A coated colorant of the present invention is a coated colorant in which a surface of a colorant is coated with a resin (P),

the resin (P) contains a colorant adsorption group-containing monomer unit, a maleic acid (anhydride) unit, and a (meth)allyl monomer unit, and
the colorant adsorption group-containing monomer unit contains at least one of an α-olefin unit and a ring-containing monomer unit.

A coloring composition containing the coated colorant and other optional components is preferably used for applications such as inks for ink jet recording, flexographic printing inks, toners, stationery, printing agents, and paints.

The invention of the present application is characterized by a coated colorant in which a surface of a colorant is coated with a resin (P), and the resin (P) is a copolymer of a monomer mixture containing a colorant adsorption group-containing monomer, maleic acid (anhydride), and a (meth)allyl monomer. Furthermore, the resin (P) can be used by esterifying, amidating, or imidizing the maleic anhydride portion as necessary. Accordingly, the resin (P) can obtain an electrostatic repulsion effect due to a carboxyl group moiety, which improves preservation stability of the coloring composition. Esterification is preferable from the viewpoint of improving compatibility with a binder.

[Coated colorant]

The coated colorant of the present invention is a compound in which the surface of the colorant is coated with the resin (P).

The coated colorant in the present specification is a compound in a particle form. The colorant can be appropriately selected from inorganic pigments, organic pigments, and dyes, and used. The colorant before being coated may be an aggregate. This is because the surface of the refined colorant is coated with the resin (P) in the process of performing refinement of the colorant when producing the coated colorant.

Examples of the inorganic pigments include carbon black, metal oxides, metal complex salts, and other inorganic pigments. Examples of the carbon black include furnace black, thermal lamp black, acetylene black, and channel black.

Examples of the metal oxides include titanium oxide, iron oxide, iron hydroxide, zirconia, and alumina.

Examples of the other inorganic pigments thereof include ultramarine blue, chrome yellow, zinc sulfide, and cobalt blue.

Examples of the organic pigments include azo pigments, diazo pigments, phthalocyanine pigments, quinacridone pigments, isoindolinone pigments, dioxazine pigments, perylene pigments, perinone pigments, thioindigo pigments, anthraquinone pigments, and quinophthalone pigments.

In terms of color index, examples of the organic pigments include C.I. Pigment Red 1, 2, 3, 4, 5, 6, 7, 9, 10, 14, 17, 22, 23, 31, 32, 38, 41, 48:1, 48:2, 48:3, 48:4, 49, 49:1, 49:2, 52:1, 52:2, 53:1, 57:1, 60:1, 63:1, 66, 67, 81:1, 81:2, 81:3, 83, 88, 90, 105, 112, 119, 122, 123, 144, 146, 147, 148, 149, 150, 155, 166, 168, 169, 170, 171, 172, 175, 176, 177, 178, 179, 184, 185, 187, 188, 190, 200, 202, 206, 207, 208, 209, 210, 216, 220, 224, 226, 242, 246, 254, 255, 264, 266, 269, 270, 272, and 279;

C.I. Pigment Yellow 1, 2, 3, 4, 5, 6, 10, 11, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, and 214;
C.I. Pigment Orange 2, 5, 13, 16, 17:1, 31, 34, 36, 38, 43, 46, 48, 49, 51, 52, 55, 59, 60, 61, 62, 64, 71, and 73;
C.I. Pigment Green 7, 10, 36, 37, 58, 59, 62, and 63;
C.I. Pigment Blue 1, 2, 15, 15:1, 15:2, 15:3, 15:4, 15:6, 16, 22, 60, 64, 66, 79, 79, and 80;
C.I. Pigment Violet 1, 19, 23, 27, 32, 37, and 42;
C.I. Pigment Brown 25 and 28;
C.I. Pigment Black 1 and 7; and
C.I. Pigment White 1, 2, 4, 5, 6, 7, 11, 12, 18, 19, 21, 22, 23, 26, 27, and 28.

Among them, the following pigments are preferable: C.I. Pigment Red 31, 48:1, 48:2, 48:3, 48:4, 57:1, 122, 146, 147, 148, 150, 170, 176, 177, 184, 185, 202, 242, 254, 255, 264, 266, and 269;

C.I. Pigment Yellow 12, 13, 14, 17, 74, 83, 108, 109, 120, 150, 151, 154, 155, 180, 185, and 213;
C.I. Pigment Orange 36, 38, 43, 64, and 73;
C.I. Pigment Green 7, 36, 37, 58, 62, and 63;
C.I. Pigment Blue 15:1, 15:3, 15:6, 16, 22, 60, and 66;
C.I. Pigment Violet 19, 23, and 32;
C.I. Pigment Brown 25;
C.I. Pigment Black 1 and 7; and
C.I. Pigment White 6.

The dye is preferably a dispersed dye. The dispersed dye is a dye having the property of sublimating when heated. Examples of the dispersed dye include C.I. Disperse Yellow 3, 7, 8, 23, 39, 51, 54, 60, 71, and 86; C.I. Disperse Orange 1, 1:1, 5, 20, 25, 25:1, 33, 56, and 76; C.I. Disperse Brown 2; C.I. Disperse Red 11, 50, 53, 55, 55:1, 59, 60, 65, 70, 75, 93, 146, 158, 190, 190:1, 207, 239, 240, and 343; C.I. Vat Red 41; C.I. Disperse Violet 8, 17, 23, 27, 28, 29, 36, and 57; and C.I. Disperse Blue 19, 26, 26:1, 35, 55, 56, 58, 60, 64, 64:1, 72, 72:1, 81, 81:1, 91, 95, 108, 131, 141, 145, 165, 359, and 360.

The colorants can be used alone or in combination of two or more kinds.

The average primary particle diameter of the colorant is usually 5 to 1,000 nm. The average primary particle diameter is, for example, an average value of about 20 arbitrary particles in a magnified image selected from the range of 2,000 to 100,000 times using a transmission electron microscope. When the particles are oval, the vertical axis length is used.

[Resin (P)]

The resin (P) contains a colorant adsorption group-containing monomer unit, a maleic acid (anhydride) unit, and a (meth)allyl monomer unit. Examples of synthesis of the resin (P) include emulsion polymerization, solution polymerization, bulk polymerization, and suspension polymerization. Examples of polymerization methods include random polymerization, alternating copolymerization, and block polymerization. Examples of polymerization reactions include radical polymerization, anionic polymerization, and cationic polymerization. In the present specification, the resin (P) can be synthesized by appropriately combining these methods.

In the present specification, the resin (P) that is randomly polymerized or alternately copolymerized in a solution using a radical polymerization initiator will be described below as an example.

The resin (P) is preferably synthesized by copolymerizing a mixture of a colorant adsorption group-containing monomer, maleic acid (anhydride), and a (meth)allyl monomer.

[Colorant adsorption group-containing monomer]

The colorant adsorption group-containing monomer may be a monomer having a structure that is adsorbed on the colorant, and specifically containing at least one of an $\alpha$-olefin unit and a ring-containing monomer unit.

Examples of the monomer having a structure that is adsorbed on the colorant include $\alpha$-olefins, aromatic ring-containing monomers, alicyclic ring-containing monomers, and heterocyclic ring-containing monomers. Among them, $\alpha$-olefins are preferable from the viewpoint of copolymerizability with maleic acid (anhydride) and a (meth)allyl monomer and the adsorption rate on the surface of the colorant.

The $\alpha$-olefin is preferably an $\alpha$-olefin having 6 to 50 carbon atoms, more preferably 8 to 38 carbon atoms, and further preferably 12 to 38 carbon atoms.

Examples of the $\alpha$-olefin include 1-hexene (6 carbon atoms), 1-heptene (7 carbon atoms), 1-octene (8 carbon atoms), 1-nonene (9 carbon atoms), 1-decene (10 carbon atoms), 1-dodecene (12 carbon atoms), 1-tetradecene (14 carbon atoms), 1-hexadecene (16 carbon atoms), 1-octadecene (18 carbon atoms), 1-eicosene (20 carbon atoms), 1-docosene (22 carbon atoms), 1-tetracosene (24 carbon atoms), 1-octacosene (28 carbon atoms), 1-triacontene (30 carbon atoms), 1-dotriacontene (32 carbon atoms), 1-tetratriacontene (34 carbon atoms), 1-hexatriacontene (36 carbon atoms), and 1-octatriacontene (38 carbon atoms).

The $\alpha$-olefins can be used alone or in combination of two or more kinds.

Examples of the aromatic ring-containing monomers include styrene, benzyl (meth)acrylate, phenoxyethyl (meth)acrylate, and styrene macromer.

Examples of the alicyclic ring-containing monomers include isobornyl acrylate, cyclohexyl acrylate, dicyclopentanyl acrylate, 3,3,5-trimethylcyclohexyl acrylate, and 4-tert-butylcyclohexyl acrylate.

Examples of the heterocyclic ring-containing monomers include N-vinyl-2-pyrrolidone, N-vinylcaprolactam, N-vinylpyridine, N-vinylpyrimidine, N-vinylpiperidone, N-vinylpyrrole, N-vinylimidazole, N-vinyloxazole, and N-vinylpyrazine, and (meth)acryloylmorpholine.

[(Meth)allyl monomer]

The (meth)allyl monomer is not particularly limited as long as it is a monomer having a (meth)allyl group, but a (meth)allyl ether monomer represented by General Formula (1) is particularly preferable.

[Chem. 1]

General Formula (1)

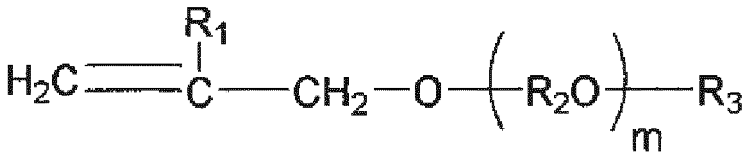

In General Formula (1), $R_1$ represents a hydrogen atom or a methyl group. $R_2O$ represents an alkyleneoxy group, and two or more kinds of alkyleneoxy groups may be added in a random shape or a block shape. As the alkyleneoxy group represented by $R_2O$, an alkyleneoxy group having 2 to 5 carbon atoms is preferable from the viewpoint of dispersion stability.

Examples of the alkyleneoxy group having 2 to 5 carbon atoms include an ethyleneoxy group, a propyleneoxy group, a butyleneoxy group, and a tetramethyleneoxy group. Among them, from the viewpoint of dispersibility, single addition of an ethyleneoxy group or a propyleneoxy group, or block or random addition of an ethyleneoxy group and a propyleneoxy group is preferable, and single addition of a propyleneoxy group, or block or random addition of an ethyleneoxy group and a propyleneoxy group is more preferable.

In General Formula (1), m is the average number of moles added of an alkyleneoxy group, which is 0 or an integer of 1 to 100. m is preferably 1 to 60, more preferably 3 to 50, and further preferably 5 to 40 from the viewpoint of copolymerizability of the monomer and the adsorption rate of the resin (P) on the colorant.

In General Formula (1), $R_3$ represents a hydrogen atom or a linear or branched alkyl group, a saturated acyl group, or a phenyl group that may be substituted with an alkyl group. As the linear or branched alkyl group, there is a linear or branched alkyl group having 1 to 20 carbon atoms, and a methyl group, an ethyl group, an isopropyl group, and the like are preferable.

As the saturated acyl group, there is a saturated acyl group having 1 to 10 carbon atoms, and a substituent derived from ethanoic acid, butanoic acid, propionic acid, and butyric acid is preferable.

Examples of the phenyl group that may be substituted with an alkyl group include a phenyl group, a naphthyl group, and p-methylphenyl.

Among them, $R_3$ is preferably a linear or branched alkyl group, and most preferably a methyl group from the viewpoint of dispersion stability.

Examples of the compound represented by General Formula (1) include alkyl (meth)allyl ethers such as methyl (meth)allyl ethers and ethyl (meth)allyl ethers; ring-containing (meth)allyl ethers such as phenyl (meth)allyl ethers and cyclohexyl (meth)allyl ethers; hydroxyalkyl (meth)allyl ethers such as 2-hydroxyethyl (meth)allyl ethers and 4-hydroxybutyl (meth)allyl ethers; and (meta)allyl esters such as (meth)allyl propionoate, (meth)allyl hexanoate, and (meth)allyl cyclohexanepropionate.

In addition, the compound represented by General Formula (1) preferably has a (poly)alkyleneoxy group. Examples thereof include (poly)alkyleneoxy group-containing (meth)allyl ethers such as polyalkylene glycol (meth)allyl ethers, alkyleneoxyglycol (meth)allyl ethers, and alkoxypolyalkylene glycol (meth)allyl ethers. Among them, from the viewpoint of dispersion stability, it is preferable to contain a (poly)alkyleneoxy group, and alkoxypolyalkylene glycol (meth)allyl ethers are more preferable.

Specific examples thereof include methoxyethylene glycol (meth)allyl ethers, methoxypolyethylene glycol (meth)allyl ethers, methoxypropylene glycol (meth)allyl ethers, methoxypolypropylene glycol (meth)allyl ethers, ethoxyethylene glycol (meth)allyl ethers, ethoxypolyethylene glycol (meth)allyl ethers, ethoxypropylene glycol (meth)allyl ethers, ethoxypolypropylene glycol (meth)allyl ethers, propoxyethylene glycol (meth)allyl ethers, propoxypolyethylene glycol (meth)allyl ethers, propoxypropylene glycol (meth)allyl ethers, and propoxypolypropylene glycol (meth)allyl ethers. From the viewpoint of dispersion stability of the coated colorant, methoxypolyethylene glycol (meth)allyl ethers and methoxypolypropylene glycol (meth)allyl ethers are more preferable, and methoxypolypropylene glycol (meth)allyl ethers are most preferable.

Examples of commercially available products of the (poly)alkyleneoxy group-containing (meth)allyl ethers include UNIOX PKA-5006 and PKA-5009, and UNISAFE PKA-5015 (all manufactured by NOF CORPORATION).

The (meth)allyl ethers can be used alone or in combination of two or more kinds.

For formation of the maleic acid (anhydride) unit, at least one of maleic acid or maleic acid anhydride is used. Among them, maleic acid anhydride is preferable in terms of excellent copolymerizability.

The resin (P) can contain a colorant adsorption group-containing monomer unit, a maleic acid (anhydride) unit, and other monomer units other than a (meth)allyl monomer unit.

Examples of the other monomer units include other vinyl monomers and other (meth)acrylic acid esters.

The resin (P) can be synthesized by adding a radical polymerization initiator and, if necessary, a chain transfer agent to a monomer mixture containing a colorant adsorption group-containing monomer unit, maleic acid anhydride, and a (meth)allyl monomer, and performing polymerization.

The obtained resin (P) is essentially an alternating polymer in which maleic acid anhydride is alternately arranged between randomly arranged colorant adsorption group-containing monomer units and a (meth)allyl monomer.

The content of the colorant adsorption group-containing monomer unit is preferably 20 to 60 mol%, more preferably 25 to 55 mol%, and further preferably 30 to 50 mol% based on all the units of the resin (P). When an appropriate amount is contained, the resin (P) is easily adsorbed on the surface of the colorant, which further improves water resistance.

The content of the maleic acid (anhydride) unit is preferably 35 to 79 mol%, more preferably 40 to 75 mol%, and further preferably 45 to 70 mol% based on all the units of the resin (P). When an appropriate amount is contained, dispersion stability of the coated colorant is further improved.

The content of the (meth)allyl monomer unit is preferably 1 to 30 mol%, more preferably 1 to 20 mol%, and further preferably 2 to 15 mol% based on all the units of the resin (P). When an appropriate amount is contained, affinity between the coated colorant and a binder resin or the like is improved, which further improves dispersion stability.

Examples of the radical polymerization initiator include azo compounds and peroxides.

Examples of the azo compounds include azobisisobutyronitrile and azobis2,4-dimethylvaleronitrile. Examples of the peroxides include cumene hydroperoxide, t-butyl hydroperoxide, benzoyl peroxide, diisopropyl peroxycarbonate, di-t-butyl peroxide, lauroyl peroxide, t-butyl peroxybenzoate, and t-butyl peroxy-2-ethylhexanoate.

The radical polymerization initiators can be used alone or in combination of two or more kinds.

As an organic solvent used for solution polymerization, for example, ethyl acetate, n-butyl acetate, isobutyl acetate, toluene, xylene, acetone, hexane, methyl ethyl ketone, cyclohexanone, and the like are used, but examples thereof are not particularly limited thereto. Two or more kinds of these polymerization solvents may be mixed and used.

The organic solvents can be used alone or in combination of two or more kinds.

The maleic acid (anhydride) unit of the resin (P) preferably has an ester binding site, an amide binding site, or an imide binding site, and particularly, it more preferably has an ester binding site or an amide binding site. A specific compound is reacted with an acid anhydride group to form these binding sites. Accordingly, dispersion stability of the coated colorant is further improved.

The ester binding site, the amide binding site, or the imide binding site is preferably formed in the proportion of 30% to 100% of 100 mol% of the acid anhydride groups. By esterification, amidation, or the like, a carboxyl group moiety can be imparted to the resin (P), and thereby an excellent electrostatic repulsion effect can be obtained. Especially in the case of esterification, compatibility with a binder is particularly improved.

A method for obtaining an esterified product or amidated product of the resin (P) is preferably, for example, a method in which an $\alpha$-olefin, maleic acid anhydride, and a (meth)allyl ether are polymerized to obtain a copolymerization containing an $\alpha$-olefin, maleic acid anhydride, and a (meth)allyl ether, and thereafter the copolymer is reacted with water, an alcohol, or an amine.

Water or alcohols are preferably used for forming the ester binding site.

Examples of the alcohols include methanol, ethanol, propanol, isopropanol, butanol, sec-butanol, tert-butanol, pentanol, amyl alcohol, hexanol, heptanol, octanol, 2-ethylhexyl alcohol, nonanol, decanol, lauryl alcohol, myristyl alcohol, cetyl alcohol, stearyl alcohol, oleyl alcohol, benzyl alcohol, $\alpha$-oxybutyric acid, 12-hydroxystearic acid, and lactic acid.

Compounds used for forming the ester binding site can be used alone or in combination of two or more kinds.

Amines are preferably used for forming the amide binding site.

Examples of the amines include methylamine, ethylamine, propylamine, isopropylamine, butylamine, amylamine, hexylamine, heptylamine, octylamine, nonylamine, decylamine, laurylamine, myristylamine, cetylamine, stearylamine, oleylamine, aniline, o-toluidine, 2-ethylaniline, 2-fluoroaniline, o-anisidine, m-toluidine, m-anisidine, m-phenetidine, p-toluidine, 2,3-dimethylaniline, 5-aminoindane, aspartic acid, glutamic acid, and $\gamma$-aminobutyric acid, but examples are not particularly limited thereto.

The amines can be used alone or in combination of two or more kinds.

The imide binding site is obtained by forming an amide bond and further preforming a dehydration reaction. In addition, the imide binding site can also be obtained by polymerizing a monomer having a pre-imidized maleimide structure. Specific examples thereof include maleimide-based monomers such as N-phenylmaleimide, N-dodecylmaleimide, o-methylphenylmaleimide, and p-hydroxyphenylmaleimide.

The acid value of the resin (P) is preferably 35 to 400 mg KOH/g, more preferably 50 to 350 mg KOH/g, and further preferably 65 to 300 mg KOH/g. When the resin (P) has an appropriate acid value, redispersibility and dispersion stability are further improved.

The number average molecular weight of the resin (P) is preferably 2,000 to 35,000, and more preferably 5,000 to 25,000. When the resin (P) has an appropriate number average molecular weight, compatibility between ease of coating of the colorant and redispersibility is easily achieved.

[Manufacturing of coated colorant]

In the present specification, a coated colorant manufacturing method is preferably a salt milling method. For example, the method includes a step of kneading a water-soluble solvent, a water-soluble inorganic salt, the colorant, and the resin (P) to coat the surface of the colorant with the resin (P), and then removing the water-soluble inorganic salt and the water-soluble solvent.

First, the water-soluble solvent, the water-soluble inorganic salt, the colorant, and the resin (P) are kneaded to coat the surface of the colorant with the resin (P).

The surface of the colorant is coated with the resin (P) while being refined by the above-mentioned kneading. When kneaded by the salt milling method, the colorant can be efficiently refined.

Examples of kneading devices used in the salt milling method include kneaders, two-roll mills, three-roll mills, ball mills, attritors, horizontal sand mills, vertical sand mills and/or annular type bead mills. Among them, the kneader is preferable in terms of enabling efficient coating of the surface of the colorant. The kneading conditions can be appropriately adjusted according to the type of colorant, the degree of refinement, and the like. In addition, heating or cooling can be performed as necessary.

The water-soluble inorganic salt acts as a crushing aid, and crushes the colorant by utilizing the high hardness of the water-soluble inorganic salt. Examples of the water-soluble inorganic salt include sodium chloride, potassium chloride, and sodium sulfate. Sodium chloride (common salt) is preferably used from the viewpoint of price.

The water-soluble solvent moistens the colorant and the water-soluble inorganic salt. The water-soluble solvent is a compound that dissolves in (is mixed with) water but does not dissolve the water-soluble inorganic salt.

Examples of the water-soluble solvent include glycols such as ethylene glycol, diethylene glycol, triethylene glycol, tetraethylene glycol, propylene glycol, polyethylene glycol, and polypropylene glycol; diols such as butanediol, pentanediol, and hexanediol; glycol esters such as propylene glycol laurate; ethers such as diethylene glycol monoethyl, diethylene glycol monobutyl, and diethylene glycol monohexyl; glycol ethers such as cellosolve containing propylene glycol ethers, dipropylene glycol ethers, and triethylene glycol ethers; alcohols such as methanol, ethanol, isopropyl alcohol, 1-propanol, 2-propanol, 1-butanol, 2-butanol, butyl alcohol, and pentyl alcohol; sulfolane; lactones such as γ-butyrolactone; lactams such as N-(2-hydroxyethyl) pyrrolidone; and glycerin. Among them, glycols such as diethylene glycol and triethylene glycol are preferable.

The water-soluble solvents can be used alone or in combination of two or more kinds.

The amount of the water-soluble solvent used is preferably 5 to 1,000 parts by mass and more preferably 50 to 500 parts by mass with respect to 100 parts by mass of the colorant.

The amount of the water-soluble inorganic salt used is preferably 50 to 2,000 parts by mass and more preferably 300 to 1,000 parts by mass with respect to 100 parts by mass of the colorant.

The amount of the resin (P) used is preferably 5 to 100 parts by mass and preferably 10 to 80 parts by mass with respect to 100 parts by mass of the colorant. When used in an appropriate amount, dispersion stability and redispersibility are further improved.

Next, the water-soluble inorganic salt and the water-soluble solvent are removed from the obtained mixture containing the coated colorant.

First, the above-mentioned mixture is taken out from a kneading device, ion exchange water is injected, and stirring is performed to obtain a suspension. The amount of the ion exchange water used is preferably 10 to 10,000 times the mass injected into the kneading device. The stirring temperature is preferably 25°C to 90°C. Next, filtration is performed to obtain a coated colorant. By these operations, the water-soluble solvent and the water-soluble inorganic salt can be removed. Furthermore, a step of removing the ion exchange water may be performed. Drying treatment is preferable for removing water. Examples of drying conditions include a method of performing drying under normal pressure in the range of 80°C to 120°C for about 12 to 48 hours, and a method of performing drying under reduced pressure in the range of 25°C to 80°C for about 12 to 60 hours. A spray-drying device is preferable for the drying treatment. In addition, pulverization treatment can be performed at the same time as the drying treatment or after the drying treatment.

[Coloring composition]

The coloring composition in the present specification preferably contains the coated colorant and a cross-linking agent. In addition, the coloring composition preferably contains one appropriately selected from a basic compound, water, a binder resin, and the like, depending on embodiment.

[Basic compound]

The basic compound neutralizes a carboxyl group derived from the resin (P) of the coated colorant and stably disperses the coated colorant. Furthermore, the basic compound is used to adjust the pH of the coloring composition to about 7 to 10.

Examples of the basic compound include organic amines such as ammonia, dimethylaminoethanol, diethanolamine, and triethanolamine; inorganic alkalis such as hydroxides of alkali metals such as sodium hydroxide, lithium hydroxide, and potassium hydroxide; organic acids, and mineral acids.

The degree of neutralization of the resin (P) is preferably 10 to 100 mol%, more preferably 30 to 100 mol%, and further preferably 50 to 100 mol% from the viewpoint of dispersion stability of the coloring composition.

The degree of neutralization is obtained by dividing the molar equivalent of the basic compound by the molar amount of the carboxyl group of the resin (P). The degree of neutralization can be obtained by the following formula.

$$\{(\text{Weight of basic compound (g)/equivalent of basic compound})/[(\text{acid value of resin (P) (KOHmg/g)} \times \text{weight of resin (P) (g)}/(56.1 \times 1{,}000)]\} \times 100$$

The basic compounds can be used alone or in combination of two or more kinds.

[Cross-linking agent]

The cross-linking agent is used to cross-link the carboxyl group derived from the resin (P) of the coated colorant. The cross-linking agent is a compound having two or more functional groups (hereinafter referred to as reactive functional groups) capable of reacting with a carboxyl group. By cross-linking, the colorant is firmly coated with the resin (P), which further improves dispersion stability of the coated colorant.

As the reactive functional groups, for example, an isocyanate group, an aziridine group, a carbodiimide group, an oxetane group, an oxazoline group, and an epoxy group are preferable; an aziridine group, a carbodiimide group, and an epoxy group are more preferable; and an epoxy group is further preferable. Addition of the cross-linking agent is preferable also from the viewpoint of improving dispersion stability of inks for ink jet recording. Specific examples of the cross-linking agent include isocyanate compounds, aziridine compounds, carbodiimide compounds, oxetane compounds, oxazoline compounds, and epoxy compounds.

Examples of the isocyanate compounds include organic polyisocyanates or isocyanate group-terminated prepolymers. Examples of the organic polyisocyanates include aliphatic diisocyanates such as hexamethylene diisocyanate and 2,2,4-trimethylhexamethylene diisocyanate; aromatic diisocyanates such as tolylene-2,4-diisocyanate and phenylene diisocyanate; alicyclic diisocyanate; aromatic triisocyanate; and modified products thereof such as urethane modified products. The isocyanate group-terminated prepolymer can be obtained by reacting an organic polyisocyanate or a modified product thereof with a low molecular weight polyol or the like.

Examples of the aziridine compounds include

N,N'-diphenylmethane-4,4'-bis(1-aziridine carboxide), N,N'-toluene-2,4-bis(1-aziridine carboxide), bisisophthaloyl-1-(2-methylaziridine), tri-1-aziridinylphosphine oxide, N,N'-hexamethylene-1,6-bis(1-aziridine carboxide), 2,2'-bishydroxymethylbutanol-tris[3-(1-aziridinyl)propionate], trimethylolpropane tri-β-aziridinylpropionate, tetramethylolmethane tri-β-aziridinylpropionate, tris-2,4,6-(1-aziridinyl)-1,3,5-triazine, and 4,4'-bis(ethyleneiminocarbonylamino)diphenylmethane.

Examples of the carbodiimide compounds include high molecular weight polycarbodiimides generated by a decarboxylating condensation reaction of a diisocyanate compound in the presence of a carbodiimidization catalyst. Examples of such high molecular weight polycarbodiimides include CARBODILITE series of Nisshinbo Chemical Inc.

Examples of the oxetane compounds include

4,4'-(3-ethyloxetan-3-ylmethyloxymethyl)biphenyl (OXBP), 3-ethyl-3-hydroxymethyl oxetane (EHO), 1,4-bis[{(3-ethyl-3-oxetanyl)methoxy}methyl]benzene (XDO), di[1-ethyl(3-oxetanyl)]methyl ether (DOX), di[1-ethyl(3-oxetanyl)]methyl ether (DOE), 1,6-bis[(3-ethyl-3-oxetanyl)methoxy]hexane (HDB),
9,9-bis[2-methyl-4-{2-(3-oxetanyl)}butoxyphenyl]fluorene, and
9,9-bis[4-[2-{2-(3-oxetanyl)}butoxy]ethoxyphenyl]fluorene.

Examples of the oxazoline compounds include a compound in which two or more, preferably two or three oxazoline groups are bonded to an aliphatic group or an aromatic group, more specifically, bisoxazoline compounds such as 2,2'-bis(2-oxazoline), 1,3-phenylene-bis-oxazoline, and 1,3-benzo-bis-oxazoline, and a compound having a terminal oxazoline group obtained by reacting the bisoxazoline compound with a polybasic carboxylic acid.

Examples of the epoxy compounds include polyglycidyl ethers such as ethylene glycol diglycidyl ethers, polyethylene glycol diglycidyl ethers, polypropylene glycol diglycidyl ethers, glycerin triglycidyl ethers, glycerol polyglycidyl ethers, polyglycerol polyglycidyl ethers, trimethylolpropane polyglycidyl ethers, sorbitol polyglycidyl ethers, pentaerythritol polyglycidyl ethers, resorcinol diglycidyl ethers, neopentyl glycol diglycidyl ethers, and hydrogenated bisphenol A type diglycidyl ethers.

Among them, compounds having two or more epoxy groups in the molecule are preferable, and ethylene glycol diglycidyl ethers and trimethylolpropane polyglycidyl ethers are particularly preferable.

The cross-linking agents can be used alone or in combination of two or more kinds.

The molecular weight (formula weight or number average molecular weight Mn) of the cross-linking agent is preferably 100 to 2,000, more preferably 120 to 1,500, and particularly preferably 150 to 1,000 from the viewpoint of ease of reaction and redispersibility. The number of reactive functional groups contained in the cross-linking agent is preferably 2 to 6 from the viewpoint of controlling the molecular weight of the resin (P) after cross-linking to improve redispersibility.

The cross-linking agent preferably has appropriate water solubility in terms of efficiently reacting with the carboxyl group of the resin (P) in water. Regarding the water solubility, the amount of the cross-linking agent dissolved in 100 g of water at 25°C is preferably 0.1 to 50 g, more preferably 0.2 to 40 g, and further preferably 0.5 to 30 g.

The amount of the cross-linking agent used is such that the reactive functional groups are preferably about 10 to 150 mol%, more preferably 20 to 120 mol%, and further preferably 30 to 100 mol% with respect to 100 mol% of the carboxyl groups of the resin (P).

Examples of the binder resin include (meth)acrylic resin, styrene-(meth)acrylic resin, polyurethane resin, styrene butadiene resin, vinyl chloride resin, polyolefin resin, polyester resin, and polyurethane resin.

The content of the binder resin is preferably 1% to 30% by mass and more preferably 2% to 20% by mass in the non-volatile content of the coloring composition.

In a coloring composition manufacturing method of the present specification, it is preferable to mix the coated colorant, the basic compound, and water, and then mix the cross-linking agent to cross-link the resin (P).

First, the coated colorant, the basic compound, and water are mixed to adjust the pH of the entire mixture to 7 to 10. Next, the cross-linking agent is mixed to perform cross-linking. The cross-linking temperature may be 25°C, but it is preferably 40°C to 95°C. The cross-linking time is preferably about 0.5 to 10 hours.

The non-volatile content of the coloring composition is preferably adjusted with water to the extent of 5% to 80% by mass.

The content of the coated colorant is preferably 5% to 40% by mass and more preferably 10% to 30% by mass in 100% by mass of the coloring composition. When an appropriate amount is contained, printability and dispersion stability are further improved.

The D50 average particle diameter (median diameter) of the coated colorant in the coloring composition is preferably 20 to 200 nm, more preferably 25 to 150 nm, further preferably 30 to 130 nm, and particularly preferably 35 to 90 nm. With an appropriate particle diameter, jetting stability from a nozzle is improved, which further improves dispersion stability of the coloring composition. A laser diffraction/light scattering method is used to measure the D50 average particle diameter.

Usage applications of the coloring composition will be described with an ink for ink jet recording as an example.

<Ink for ink jet recording>

The ink for ink jet recording of the present specification contains the coated colorant, water, and a water-soluble solvent.

The ink for ink jet recording of the present specification uses water as a solvent (medium), but it is preferable to use a water-soluble solvent in combination in order to prevent the ink from drying. In addition, since dispersion stability of the coated colorant is improved, permeability to a base material after printing and wetting and spreading properties are improved.

Examples of the water-soluble solvent include polyhydric alcohols, polyhydric alcohol alkyl ethers, polyhydric

alcohol aryl ethers, nitrogen-containing heterocyclic compounds, amides, amines, sulfur-containing compounds, propylene carbonate, ethylene carbonate, and other water-soluble solvents.

Examples of the polyhydric alcohols include glycerin, ethylene glycol, diethylene glycol, triethylene glycol, tetraethylene glycol, polyethylene glycol, 1,2-propanediol, 1,3-propylene diol, dipropylene glycol, tripropylene glycol, polypropylene glycol, 1,2-butanediol, 1,3-butanediol, 1,4-butanediol, 1,2-pentanediol, 1,3-pentanediol, 1,4-pentanediol, 1,5-pentanediol, 1,2-hexanediol, 1,3-hexanediol, 1,4-hexanediol, 1,5-hexanediol, 1,6-hexanediol, 3-methyl-1,3-butanediol, trimethylolethane, trimethylolpropane, 1,2,6-hexanetriol, 1,2,4-butanetriol, 1,2,3-butanetriol, 3-methylpentane-1,3,5-triol, 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, and 2-ethyl-1,3-hexanediol. Among them, 2-ethyl-1,3-hexanediol, 2,2,4-trimethyl-1,3-pentanediol, 1,2-propanediol, 1,2-butanediol, 1,3-butanediol, 1,2-pentanediol, 1,5-pentanediol, 1,2-hexanediol, 1,6-hexanediol, and 1,2-heptanediol are preferable.

Examples of the polyhydric alcohol alkyl ethers include ethylene glycol monoethyl ethers, ethylene glycol monobutyl ethers, diethylene glycol monomethyl ethers, diethylene glycol monoethyl ethers, diethylene glycol monobutyl ethers, tetraethylene glycol monomethyl ethers, propylene glycol monoethyl ethers, and propylene glycol monobutyl ethers. Examples of the polyhydric alcohol aryl ethers include ethylene glycol monophenyl ethers, diethylene glycol monophenyl ethers, tetraethylene glycol chlorophenyl ethers, and ethylene glycol monobenzyl ethers.

Examples of the nitrogen-containing heterocyclic compounds include 2-pyrrolidone, N-methyl-2-pyrrolidone, N-hydroxyethyl-2-pyrrolidone, 1,3-dimethyl imidazolidinone, $\varepsilon$-caprolactam, and $\gamma$-butyrolactone.

Examples of the amides include formamide, N-methylformamide, and N,N-dimethylformamide.

Examples of the amines include monoethanolamine, diethanolamine, triethanolamine, monoethylamine, diethylamine, and triethylamine.

Examples of the sulfur-containing compounds include dimethyl sulfoxide, sulfolane, and thiodiethanol.

As the other water-soluble solvent, sugar is preferable. Examples of saccharides include monosaccharides, disaccharides, oligosaccharides (including trisaccharides and tetrasaccharides), and polysaccharides. Examples of the sugar include glucose, mannose, fructose, ribose, xylose, arabinose, galactose, maltose, cellobiose, lactose, sucrose, trehalose, and maltotriose. Here, the polysaccharide means a sugar in a broad sense, and includes substances widely present in nature such as $\alpha$-cyclodextrin and cellulose. In addition, examples of derivatives of these saccharides include reducing sugar of the above-mentioned saccharides (for example, sugar alcohols [represented by General Formula: $HOCH_2(CHOH)_nCH_2OH$ (where n = represents an integer of 2 to 5)]), oxidized sugar (for example, aldonic acid and uronic acid), amino acid, and thioic acid. Among them, sugar alcohols are preferable, and maltitol and sorbitol are more preferable.

The water-soluble solvents can be used alone or in combination of two or more kinds.

The content of the water-soluble solvent is preferably 3% to 60% by mass and more preferably 3% to 50% by mass in the ink for ink jet recording. In addition, the content of water is preferably 10% to 90% by mass and more preferably 30% to 80% by mass in the ink for ink jet recording. When an appropriate amount of the water-soluble solvent is contained, ink jetting stability from a head is improved.

The ink for ink jet recording preferably contains a binder resin. Accordingly, water resistance, solvent resistance, rub resistance, glossiness, and the like of a printed coating film are improved. Examples of the binder resin include acrylic resins, polyester resins, alkyd resins, fluororesin, urethane resins, and silicone-containing resins, which contain a cross-linking functional group.

The ink for ink jet recording of the present specification can contain additives as necessary. Examples of the additives include surfactants, antifoaming agents, and preservatives. The content of the additive is preferably 0.05% to 10% by mass and more preferably 0.2% to 5% by mass in the ink for ink jet recording.

The ink for ink jet recording of the present specification can be used in various ink jet printers. Examples of ink jet methods include a charge control type, a continuous injection type such as a spray type, and an on-demand type such as a piezo method, a thermal method, and an electrostatic attraction method.

<Flexographic printing ink>

The flexographic printing ink of the present specification contains the coated colorant, and more preferably contains a binder resin. Examples of the binder resin include acrylic resins and urethane resins. In addition, the flexographic printing ink can contain an additive, a solvent, and a cross-linking agent.

(Acrylic resin)

Examples of the acrylic resins include an acrylic copolymer, an acrylic acid-styrene copolymer resin, an acrylic acid-maleic acid resin, and an acrylic acid-styrene-maleic acid resin. The acrylic copolymer is a copolymer in which two or more kinds of monomers among (meth)acrylic acids and (meth)acrylic acid esters are used. The above-mentioned

two or more kinds of monomers may be selected from (meth)acrylic acid esters.

For the weight-average molecular weight of the acrylic resin, a case in which it is in the range of 200,000 to 800,000 is preferable. When the weight-average molecular weight is less than 200,000, the strength of a resin film may be lowered, and base material adhesiveness, water friction resistance, scratch resistance, and blocking resistance of a laminate may be lowered. On the other hand, when the weight-average molecular weight exceeds 800,000, because motility of a molecular chain is lowered, there is a concern that fusion welding between ink film layers becomes insufficient under low temperature drying conditions, which lowers base material adhesiveness and water friction resistance of a laminate. In addition, resolubility is likely to be lowered.

The glass transition temperature (Tg) of the acrylic resin is preferably about -30°C to 30°C. With an appropriate Tg, water friction resistance, blocking resistance, and adhesiveness to a base material are further improved.

(Urethane resin)

In the present invention, as the urethane resin, a polyurethane-urea resin can be used in addition to the polyurethane resin. The urethane resin preferably has an acid value from the viewpoint of film forming properties. The weight-average molecular weight of the urethane resin is preferably 10,000 to 100,000. With an appropriate molecular weight, adhesiveness to a base material, water friction resistance, scratch resistance, and blocking resistance are further improved.

The acid value of the binder resin is preferably 20 to 180 mg KOH/g and more preferably 40 to 150 mg KOH/g. With an appropriate acid value, resolubility in printing, adhesiveness to a base material, water friction resistance, and blocking resistance are further improved. The acid value refers to the number of milligrams of potassium hydroxide required to neutralize acidic components contained in 1 g of the resin.

The amount of the binder resin contained in the flexographic printing ink is preferably 10% to 40% by mass. When an appropriate amount is contained, strength of a ink coating film is improved, and adhesiveness to a base material and water friction resistance are further improved.

The flexographic printing ink can contain additives as necessary. Examples of the additives include leveling agents, wetting agents, water repellent agents, antifoaming agents, waxes, and cross-linking agents.

Examples of solvents used for the flexographic printing ink include water and the above-mentioned water-soluble solvents. The solvents can be used alone or in combination of two or more kinds.

The content of the coated colorant is preferably an amount sufficient to secure the concentration and coloring power of the flexographic printing ink, that is, 1% to 50% by mass in the total amount of the flexographic printing ink. The viscosity of a flexographic printing ink composition is preferably within the range of 10 mPa·s or more from the viewpoint of preventing the coated colorant from settling and appropriately dispersing it, and 1,000 mPa·s or less from the viewpoint of workability efficiency during ink manufacturing and printing. The above-mentioned viscosity is a viscosity measured at 25°C with a B-type viscometer manufactured by Tokimec, Inc.

The flexographic printing ink can be prepared by mixing and dispersing the above-mentioned components. For example, a water-based flexographic ink can be produced by adding wax, a wetting agent, and the like as optional components in addition to the coated colorant of the present invention, and mixing and stirring. For dispersion and stirring, examples include dispersers, including ultrasonic oscillators, such as high speed mixers, homogenizers, planetary mixers, trimix, kneaders, extruders, horizontal sand mills, vertical sand mills or/and annular type bead mills, paint shakers, and ball mills, two-roll mills, and three-roll mills.

<Toner>

A toner of the present specification contains the coated colorant. In addition, the toner can be used by being appropriately selected from a binder resin, a mold release agent, a charge control agent, a lubricant, a fluidity improver, an abrading agent, a conductivity imparting agent, an image peeling preventive agent, and the like.

(Binder resin)

As the binder resin, it is preferable to use a colorless, transparent or white, or light-colored resin so as not to interfere with the hue of the coated colorant of each color.

Examples of the binder resin include monopolymers of styrene, such as polystyrene, poly-p-chlorostyrene, and polyvinyltoluene, and substitution products thereof; styrene-based copolymers or cross-linked styrene-based copolymers such as styrene-p-chlorostyrene copolymers, styrene-vinyltoluene copolymers, styrene-vinylnaphthalene copolymers, styrene-acrylic acid ester copolymers, styrene-methacrylate copolymers, styrene-α-chloromethyl methacrylate copolymers, styrene-acrylonitrile copolymers, styrene-vinyl methyl ether copolymers, styrene-vinyl ethyl ether copolymers, styrene-vinyl methyl ketone copolymers, styrene-butadiene copolymers, styrene-isoprene copolymers, and styrene-acrylonitrile-indene copolymers; and polyvinyl chloride, phenol resins, naturally modified phenol resins, natural resin modified maleic acid resins, acrylic resins, methacrylic resins, polyvinyl acetate, silicone resins, polyester resins, polyurethane, polyamide resins, furan resins, epoxy resins, xylene resins, polyvinyl butyral, terpene resins, coumarone-indene resins, and petroleum resins. Among them, polyester resins and styrene-based copolymers are preferable.

The glass transition temperature (Tg) of the binder resin is preferably 50°C to 70°C. The glass transition temperature (Tg) is measured by obtaining a value of the intersection of an extension line of a baseline at a temperature equal to or lower than Tg when measured at the temperature rising rate of 10°C/min with a tangent line of a heat absorption curve near Tg using a differential scanning calorimeter (DSC-60 manufactured by Shimadzu Corporation) in the present invention.

In addition, the binder resin preferably has the softening temperature Ts by a flow tester of 60°C to 90°C. This is an effective numerical value for increasing compatibility with the colorant.

In the present invention, measurement of the softening temperature Ts is performed using a flow tester CFT-500D manufactured by Shimadzu Corporation under the conditions of the starting temperature of 40°C, the temperature rising rate of 6.0°C/min, the test load of 20 kg, the preheating time of 300 seconds, the die hole diameter of 0.5 mm, and the die length of 1.0 mm.

The mold release agent improves mold release properties (offset prevention properties) when fixing a thermal roll, for example. Examples of the mold release agent include aliphatic hydrocarbons, fatty acid metal salts, higher fatty acids, fatty acid esters or partially saponified products thereof, silicone oils, and various waxes. Among them, ethylene homopolymers having the weight-average molecular weight (Mw) of about 500 to 8,000, low molecular weight polyethylene, low molecular weight polypropylene, and waxes such as microcrystalline wax, carnauba wax, sasol wax, and paraffin wax are preferable. These are usually added at the proportion of about 0.5% to 10% by mass with respect to 100 parts by mass of toner mother particles.

The charge control agent is used to impart triboelectric charging properties to the toner for the purpose of improving sharpness of images obtained by development. Use of the charge control agent can adjust an amount of electrifying to be in an appropriate amount. As the charge control agent, a positive charge control agent or a negative charge control agent is used depending on toner.

Examples of the positive charge control agent include quaternary ammonium salt compounds (for example, tributylbenzylammonium-1-hydroxy-4-naphthosulfonic acid salt and tetrabutylbenzylammonium tetrafluoroborate), quaternary ammonium salt organic tin oxides (for example, dibutyltin oxide, dioctyltin oxide, and dicyclohexyltin oxide), diorgano tin borate (dibutyl tin borate, dioctyl tin borate, and dicyclohexyl tin borate), and polymers having an amino group.

Examples of the negative charge control agent include zinc salts, calcium salts, chromium salts, and the like of aromatic hydroxycarboxylic acid, divalent or trivalent metal salts or metal chelate (complex) of aryloxycarboxylic acid such as salicylic acid or salicylic acid derivatives, fatty acid soap, and metal naphthenic acid. The amount of the charge control agent used is preferably 0.1 to 10 parts by mass and more preferably 0.5 to 8 parts by mass with respect to 100 parts by mass of the binder resin.

The toner is preferably a pulverized toner by a melt-kneading method from the viewpoint of productivity and dispersibility of the coated colorant. The pulverized toner by the melt-kneading method can be manufactured by uniformly mixing raw materials such as the coated colorant, the binder resin, and the charge control agent with a mixer such as a Henschel mixer, thereafter melt-kneading with a closed type kneader, a single-screw or two-screw extruder, an open roll type kneader, or the like, cooling, pulverizing, and classifying, for example. The content of the coated colorant is preferably contained in the proportion of 10% to 70% by weight in the toner from the viewpoint of productivity and dispersibility of the colorant.

In the present specification, the toner is in the form of particles, and the weight-average particle diameter is preferably 3 to 15 μm and more preferably 5 to 10 μm. The particle size distribution of the toner can be measured using a COULTER COUNTER (Multisizer 3, manufactured by Beckman Coulter Inc.), for example.

<Paint>

In the present specification, the paint contains the coated colorant. The paint preferably further contains a binder resin, and more preferably contains a cross-linking agent. The paint is preferably a water-based paint containing the coated colorant and the binder resin. The ratio of the coated colorant and the binder resin varies depending on the required usage applications and is not particularly limited.

(Binder resin)

Examples of the binder resin include acrylic resins, polyester resins, alkyd resins, fluororesin, urethane resins, and silicone-containing resins, which contain a cross-linking functional group. Examples of the cross-linking agent include melamine resins, urea resins, polyisocyanate compounds, block polyisocyanate compounds, epoxy compounds, carboxyl group-containing compounds, acid anhydrides, and alkoxysilane group-containing compounds. Among them, the combination use of acrylic resins and melamine resins is preferable.

As necessary, the paint can further contain water, organic solvents, rheology control agents, pigment dispersants, antisettling agents, curing catalysts, antifoaming agents, antioxidants, ultraviolet absorbers, surface conditioners, cross-linking agents, and extender pigments as appropriate.

The paint can be produced by mixing and dispersing the above-mentioned materials.

Various base materials can be coated with the paint. Examples of the base materials include metallic base materials such as iron, stainless steel, and aluminum, and surface-treated products thereof; cement-based base materials such as cements, limes, and gypsums; and plastic-based base materials such as polyvinyl chlorides, polyesters, polycarbonates, and acrylics.

Examples of the coating of the paint include brush coating, roller coating, and spray coating. After coating, a film is formed at room temperature or by heating and drying. The thickness of the film is usually about 5 to 70 $\mu$m.

<Stationery>

The stationery of the present specification contains the coated colorant and can be used for applications such as writing tools, recorders, and printers. The stationery preferably contains water and a binder in addition to the coated colorant. The stationery can optionally contain a water-soluble organic solvent, a thickener, a dispersant, a lubricant, a rust inhibitor, a preservative, an antibacterial agent, or the like depending on each usage applications (for example, ballpoint pens, marking pens, and the like). The ratio of the coated colorant and the binder resin varies depending on the required usage applications and is not particularly limited.

The stationery is preferably prepared by creating a high-concentration aqueous dispersion liquid of the coated colorant, further diluting it with water, and adding the above-mentioned binder resin and, as necessary, other additives. A method for dispersing the coated colorant is not particularly limited, and the above-mentioned known dispersion method may be used.

The stationery is more preferably used for applications such as a thixotropic ink (for example, an ink for gel ink water-based ballpoint pens) and a Newtonian ink (for example, an ink for low-viscosity water-based ballpoint pens), for example.

In addition, the pH (25°C) of stationery is preferably adjusted to 5 to 10 by a pH adjuster or the like from the viewpoint of usability, safety, stability of the ink itself, and matching properties with an ink container, and it is more preferably 6 to 9.5.

The content of the coated colorant can be appropriately adjusted according to the line concentration of the stationery, but is preferably about 0.1% to 40% by mass in the total amount of an ink composition for stationery.

<Printing agent>

The printing agent of the present specification preferably contains the coated colorant, water, and a binder resin. The printing agent can record images such as characters, pictures, and patterns on fabric cloth such as woven fabrics, non-woven fabrics, and knitted fabrics. The ratio of the coated colorant and the binder resin varies depending on the required usage applications and is not particularly limited.

As the binder resin, the above-mentioned binder resin can be used. The binder resin can be used in any form of water-dispersed particles, a water-soluble resin, and the like. Examples of the binder resin include urethane resins and acrylic resins.

Regarding the printing agent, the printing agent can be produced by producing an aqueous dispersion liquid of the coated colorant, thereafter mixing water, a binder resin, and other additives as necessary, and performing a preferable treatment method such as dyeing or printing according to fibers to be colored.

A printing agent for screen recording preferably contains, as an additive, a preservative, a viscosity-adjusting agent, a pH adjuster, a chelating agent, an antioxidant, an ultraviolet absorber, a flame retardant, a cross-linking agent, and the like. The concentration of the colorant of the printing agent for screen recording is preferably 1% to 10% by mass.

In addition, a printing agent for dyeing preferably contains, as an additive, a preservative, a viscosity-adjusting agent, a pH adjuster, a chelating agent, an antioxidant, an ultraviolet absorber, a flame retardant, a cross-linking agent, and the like. It is preferable to use one in which the concentration of the colorant of the printing agent for dyeing is within the range of 1% to 10% by mass. The viscosity of the printing agent for dyeing is arbitrarily set within the range of 1 mPa·s to 100 mPa·s according to printing devices.

A printing agent for spray printing preferably contains, as an additive, a viscosity-adjusting agent, a pH adjuster, a chelating agent, a plasticizer, an antioxidant, an ultraviolet absorber, and the like. The concentration of the colorant of the printing agent for spray recording is preferably 1% by mass to 10% by mass. The viscosity of the printing agent for spray recording is arbitrarily set within the range of 1 mPa·s to 100 mPa·s according to devices.

A printing agent for ink jet recording preferably contains, as an additive, a preservative, a viscosity-adjusting agent, a pH adjuster, a chelating agent, an antioxidant, an ultraviolet absorber, a flame retardant, and the like. The concentration of the colorant of the printing agent for ink jet recording is preferably 1% by mass to 20% by mass. The above-mentioned additive is preferably added to an aqueous dispersion of the coated colorant together with the above-mentioned binder resin.

Examples of the preservative include sodium benzoate, sodium pentachlorophenol, sodium-2-pyridinethiol-1-oxide, sodium sorbate, sodium dehydroacetate, and 1,2-dibenzisothiazolin-3-one (Proxel GXL, Proxel XL-2, Proxel LV, Proxel AQ, Proxel BD20, and Proxel DL of Arch Chemicals, Inc.).

Specific examples of the viscosity-adjusting agent include water-soluble natural or synthetic polymers having carboxymethyl cellulose, sodium polyacrylate, polyvinylpyrrolidone, gum arabic, starch, or the like as the main component.

Examples of the pH adjuster include collidine, imidazole, phosphoric acid, 3-(N-morpholino)propane sulfonic acid, tris(hydroxymethyl)aminomethane, and boric acid. Examples of the chelating agent include ethylenediaminetetraacetic acid, ethylenediaminediacetic acid, nitrilotriacetic acid, 1,3-propanediaminetetraacetic acid, diethylenetriaminepentaacetic acid, N-hydroxyethylethylenediamine triacetic acid, iminodiacetic acid, uramildiacetic acid, 1,2-diaminocyclohexane-N,N,N',N'-tetraacetic acid, malonic acid, succinic acid, glutaric acid, maleic acid, and salts thereof (including hydrates).

Examples of the antioxidant include hindered phenol compounds, hydroquinone compounds, phosphite compounds, substitution products thereof, copper halides, and alkali metal halides. Examples of the ultraviolet absorber include organic compound-based ultraviolet absorbers such as benzotriazole-based and benzophenone-based, and inorganic compound-based ultraviolet absorbers such as titanium oxide and zinc oxide.

When the printing agent is applied to an ink jet recording method, the surface tension thereof is preferably adjusted to 20 mN/m or more and 60 mN/m or less. It is more preferably 20 mN or more and 45 mN/m or less, and further preferably 20 mN/m or more and 40 mN/m or less. When the surface tension is less than 20 mN/m, a liquid may overflow to a nozzle surface, and printing may not be performed normally. On the other hand, when it exceeds 60 mN/m, repelling on a non-absorbent base material tends to occur easily. In addition, the viscosity is preferably 1.2 mPa·s or more and 20.0 mPa·s or less, more preferably 2.0 mPa·s or more and less than 15.0 mPa·s, and further preferably 3.0 mPa·s or more and less than 12.0 mPa·s. When the viscosity is within this range, excellent jetting property and maintenance of good ejection properties for a long period of time can be achieved. The surface tension can be appropriately adjusted by the above-mentioned surfactant.

The printing agent of the present invention can be printed on fabric cloth, artificial leathers, natural leathers, and the like. Printing on fabric cloth is particularly excellent.

The fabric cloth is preferably a medium constituted of fibers, and may be non-woven fabric in addition to woven fabric. Examples of materials include cotton, silk, wool, linen, nylon, polyester, polyurethane, and rayon.

## Examples

Hereinafter, the present invention will be described in more detail with reference to examples and comparative examples. Needless to say, the present invention is not limited to the examples. Hereinafter, "part" is "part by mass" and "%" is "% by mass."

### (Number average molecular weight (Mn))

The number average molecular weight (Mn) is a number average molecular weight (Mn) in terms of polystyrene measured using a TSK-GEL SUPER HZM-N column (manufactured by TOSOH CORPORATION) at the column temperature of 40°C and using THF as a developing solvent at the flow rate of 0.35 ml/minutes with a GPC equipped with an RI detector (HLC-8320GPC manufactured by TOSOH CORPORATION).

### (Acid value)

About 1 g of a sample was accurately weighed in an Erlenmeyer flask, and 50 ml of a mixed solution of distilled water/dioxane (weight ratio: distilled water/dioxane = 1/9) was added for dissolution. For the above-mentioned sample solution, using a potential difference measuring device (manufactured by KYOTO ELECTRONICS MANUFACTURING CO., LTD., device name "automatic potentiometric titrator AT-710M"), titration was performed with a 0.1 mol/L potassium hydroxide/ethanol solution (titer F) to measure the amount of the potassium hydroxide/ethanol solution (a (mL)) required until the end of the titration. The acid value (mg KOH/g) was obtained as the value of a resin in a dried state by the following formula.

$$\text{Acid value (mg KOH/g)} = \{(5.611 \times \alpha \times F)/S\}/(\text{non-volatile content concentration}/100)$$

Provided that,

S: Amount of sample collected (g),
a: Amount of 0.1 mol/L potassium hydroxide/ethanol solution consumed (ml),
F: Titer of 0.1 mol/L potassium hydroxide/ethanol solution

Table 1 shows (meth)allyl monomers used in the synthesis of the resin (P). Regarding the (meth)allyl monomers, synthesis could be carried out according to a known synthesis method of Japanese Patent Laid-Open No. H01-000109 and the like.

[Table 1]

Table 1

| Monomer (M) | Structural formula | Number average molecular weight or formula weight |
|---|---|---|
| Monomer M1 | 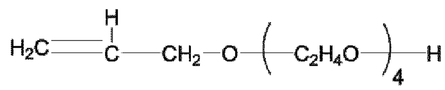 | 200 |
| Monomer M2 | 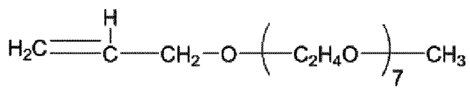 | 350 |
| Monomer M3 | 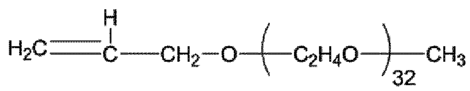 | 1,500 |
| Monomer M4 | 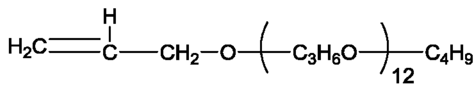 | 800 |
| Monomer M5 | 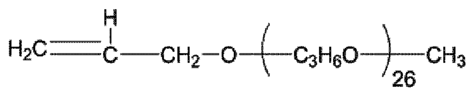 | 1,500 |
| Monomer M6 | Random addition 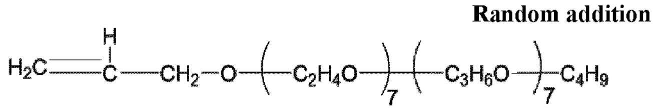 | 800 |
| Monomer M7 | Random addition 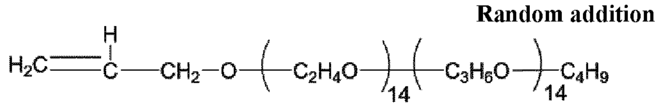 | 1,600 |
| Monomer M8 | Block addition 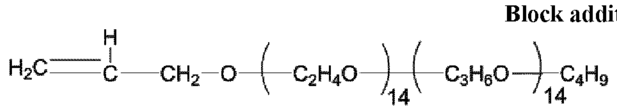 | 1,600 |
| Monomer M9 | Random addition 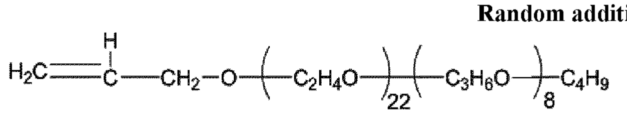 | 1,600 |

(continued)

| Monomer (M) | Structural formula | Number average molecular weight or formula weight |
|---|---|---|
| Monomer M10 | Random addition 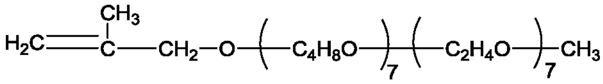 | 850 |
| Monomer M11 | 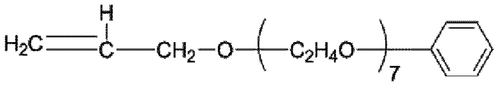 | 400 |
| Monomer M12 | 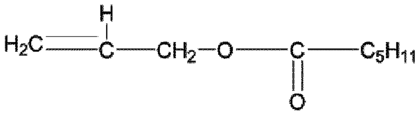 | 156 |
| Monomer M13 | 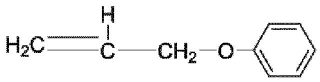 | 134 |
| Monomer M14 | 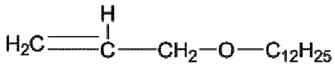 | 226 |

<Manufacturing of resin (P)>

(Manufacturing Example 1)

In a reaction vessel equipped with a gas introduction tube, a thermometer, a condenser, and a stirrer, 65.9 parts (45 mol%) of 1-octadecene as a colorant adsorption group-containing monomer, 28.3 parts (50 mol%) of maleic acid anhydride, 5.8 parts (5 mol%) of a monomer (M-1) as an allyl monomer, 10 parts of xylene, 0.6 parts of octyl thioglycolate as a chain transfer agent were put in a flask, and after nitrogen substitution, heating and stirring were performed at 130°C. A mixture of 1.0 part of t-butyl peroxy-2-ethylhexanoate and 20 parts of xylene as a radical polymerization initiator was added dropwise thereto for 2 hours while stirring. Thereafter, the reaction was caused by stirring for another hour while maintaining the temperature at 130°C. After confirming that the polymerization conversion rate was 95% to 100%, subsequently, the reaction temperature was lowered to 60°C, 50.8 parts of isopropyl alcohol (5 equivalents to the amount put in maleic acid anhydride), and 0.01 part of diazabicycloundecene as a catalyst were added and heated to 80°C while stirring, and the reaction was completed after maintaining the temperature for 4 hours. The organic solvent was concentrated under reduced pressure and completely removed to obtain a resin (P-1). The number average molecular weight of the obtained resin (P-1) was 10,000.

(Manufacturing Examples 2 to 29)

A resin (P-2) to a resin (P-29) were obtained by performing synthesis in the same manner as in the resin (P-1) except that the raw materials and the amount put in Manufacturing Example 1 were changed as shown in Table 2 and Table 3. In Manufacturing Example 7, an acid anhydride group in a maleic acid (anhydride) unit was not modified. In addition, the number average molecular weight of the resin was appropriately adjusted by changing the amounts of the radical polymerization initiator and the chain transfer agent used. The blending amounts in Table 2 and Table 3 are in mol%.

[Table 2]

| Table 2 | Resin (P) | | | | | | | | | | | | | | |
|---|---|---|---|---|---|---|---|---|---|---|---|---|---|---|---|
| | Manufacturing Example 1 | Manufacturing Example 2 | Manufacturing Example 3 | Manufacturing Example 4 | Manufacturing Example 5 | Manufacturing Example 6 | Manufacturing Example 7 | Manufacturing Example 8 | Manufacturing Example 9 | Manufacturing Example 10 | Manufacturing Example 11 | Manufacturing Example 12 | Manufacturing Example 13 | Manufacturing Example 14 | Manufacturing Example 15 |
| | P-1 | P-2 | P-3 | P-4 | P-5 | P-6 | P-7 | P-8 | P-9 | P-10 | P-11 | P-12 | P-13 | P-14 | P-15 |
| 1-Octene | | | | | | | | | | | | | | | |
| 1-Octadecene | 45 | 49 | 45 | 30 | 45 | 45 | 45 | 45 | 45 | 45 | 45 | 45 | 45 | 45 | 45 |
| 1-Tetracosene | | | | | | | | | | | | | | | |
| Styrene | | | | | | | | | | | | | | | |
| Maleic acid anhydride | 50 | 50 | 50 | 50 | 50 | 50 | 50 | 50 | 50 | 50 | 50 | 50 | 50 | 50 | 50 |
| Monomer (M1) | 5 | | | | | | | | | | | | | | |
| Monomer (M2) | | 1 | 5 | 20 | | | | | | | | | | | |
| Monomer (M3) | | | | | 5 | | | | | | | | | | |
| Monomer (M4) | | | | | | 5 | | | | | | | | | |
| Monomer (M5) | | | | | | | 5 | 5 | 5 | 5 | 5 | | | | |
| Monomer (M6) | | | | | | | | | | | | 5 | | | |
| Monomer (M7) | | | | | | | | | | | | | 5 | | |
| Monomer (M8) | | | | | | | | | | | | | | 5 | |

(continued)

| Table 2 | Resin (P) | | | | | | | | | | | | | | |
|---|---|---|---|---|---|---|---|---|---|---|---|---|---|---|---|
| | Manufacturing Example 1 | Manufacturing Example 2 | Manufacturing Example 3 | Manufacturing Example 4 | Manufacturing Example 5 | Manufacturing Example 6 | Manufacturing Example 7 | Manufacturing Example 8 | Manufacturing Example 9 | Manufacturing Example 10 | Manufacturing Example 11 | Manufacturing Example 12 | Manufacturing Example 13 | Manufacturing Example 14 | Manufacturing Example 15 |
| | P-1 | P-2 | P-3 | P-4 | P-5 | P-6 | P-7 | P-8 | P-9 | P-10 | P-11 | P-12 | P-13 | P-14 | P-15 |
| Monomer (M9) | | | | | | | | | | | | | | | 5 |
| Monomer (M10) | | | | | | | | | | | | | | | |
| Monomer (M11) | | | | | | | | | | | | | | | |
| Monomer (M12) | | | | | | | | | | | | | | | |
| Monomer (M13) | | | | | | | | | | | | | | | |
| Monomer (M14) | | | | | | | | | | | | | | | |
| Total monomer (mol%) | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| Modification of maleic acid anhydride | IPA | IPA | IPA | IPA | IPA | IPA | Not performed | IPA | HA | Water | LA | IPA | IPA | IPA | IPA |

(continued)

| Table 2 | Resin (P) | | | | | | | | | | | | | | |
|---|---|---|---|---|---|---|---|---|---|---|---|---|---|---|---|
| | Manufacturing Example 1 | Manufacturing Example 2 | Manufacturing Example 3 | Manufacturing Example 4 | Manufacturing Example 5 | Manufacturing Example 6 | Manufacturing Example 7 | Manufacturing Example 8 | Manufacturing Example 9 | Manufacturing Example 10 | Manufacturing Example 11 | Manufacturing Example 12 | Manufacturing Example 13 | Manufacturing Example 14 | Manufacturing Example 15 |
| | P-1 | P-2 | P-3 | P-4 | P-5 | P-6 | P-7 | P-8 | P-9 | P-10 | P-11 | P-12 | P-13 | P-14 | P-15 |
| Acid value mg KOH/g | 138 | 136 | 133 | 125 | 105 | 120 | 236 | 105 | 97 | 227 | 85 | 120 | 103 | 103 | 103 |
| Number average molecular weight Mn | 10,000 | 11,000 | 11,000 | 11,000 | 12,000 | 12,000 | 12,000 | 13,000 | 13,000 | 12,000 | 12,000 | 13,000 | 13,000 | 13,000 | 11,000 |

[Table 3]

| Table 3 | Resin (P) | | | | | | | | | | | | | |
|---|---|---|---|---|---|---|---|---|---|---|---|---|---|---|
| | Manufacturing Example 16 | Manufacturing Example 17 | Manufacturing Example 18 | Manufacturing Example 19 | Manufacturing Example 20 | Manufacturing Example 21 | Manufacturing Example 22 | Manufacturing Example 23 | Manufacturing Example 24 | Manufacturing Example 25 | Manufacturing Example 26 | Manufacturing Example 27 | Manufacturing Example 28 | Manufacturing Example 29 |
| | P-16 | P-17 | P-18 | P-19 | P-20 | P-21 | P-22 | P-23 | P-24 | P-25 | P-26 | P-27 | P-28 | P-29 |
| 1-Octene | | | | | | 45 | | | | | | | | |
| 1-Octadecene | 45 | 45 | 45 | 45 | 45 | | | | | | | | | |
| 1-Tetracosene | | | | | | | 45 | 45 | 45 | 10 | 40 | | | 50 |
| Styrene | | | | | | | | | | | 5 | 45 | | |
| Maleic acid anhydride | 50 | 50 | 50 | 50 | 50 | 50 | 50 | 50 | 50 | 50 | 50 | 50 | 50 | 50 |
| Monomer (M1) | | | | | | | | | | | | | | |
| Monomer (M2) | | | | | | | | | | | | | | |
| Monomer (M3) | | | | | | | | | | | | | | |
| Monomer (M4) | | | | | | | | | | | | | | |
| Monomer (M5) | | | | | | 5 | 5 | 5 | 5 | 40 | 5 | 5 | 50 | |
| Monomer (M6) | | | | | | | | | | | | | | |
| Monomer (M7) | | | | | | | | | | | | | | |
| Monomer (M8) | | | | | | | | | | | | | | |

(continued)

| Table 3 | Resin (P) | | | | | | | | | | | | | |
|---|---|---|---|---|---|---|---|---|---|---|---|---|---|---|
| | Manufacturing Example 16 | Manufacturing Example 17 | Manufacturing Example 18 | Manufacturing Example 19 | Manufacturing Example 20 | Manufacturing Example 21 | Manufacturing Example 22 | Manufacturing Example 23 | Manufacturing Example 24 | Manufacturing Example 25 | Manufacturing Example 26 | Manufacturing Example 27 | Manufacturing Example 28 | Manufacturing Example 29 |
| | P-16 | P-17 | P-18 | P-19 | P-20 | P-21 | P-22 | P-23 | P-24 | P-25 | P-26 | P-27 | P-28 | P-29 |
| Monomer (M9) | | | | | | | | | | | | | | |
| Monomer (M10) | 5 | | | | | | | | | | | | | |
| Monomer (M11) | | 5 | | | | | | | | | | | | |
| Monomer (M12) | | | 5 | | | | | | | | | | | |
| Monomer (M13) | | | | 5 | | | | | | | | | | |
| Monomer (M14) | | | | | 5 | | | | | | | | | |
| Total monomer (mol%) | 100.0 | 100.0 | 100.0 | 100.0 | 100.0 | 100.0 | 100.0 | 100.0 | 100.0 | 100.0 | 100.0 | 100.0 | 100.0 | 100.0 |
| Modification of maleic acid anhydride | IPA | IPA | IPA | IPA | IPA | IPA | IPA | IPA | IPA | IPA | IPA | IPA | IPA | IPA |

(continued)

| Table 3 | Resin (P) | | | | | | | | | | | | | |
|---|---|---|---|---|---|---|---|---|---|---|---|---|---|---|
| | Manufacturing Example 16 | Manufacturing Example 17 | Manufacturing Example 18 | Manufacturing Example 19 | Manufacturing Example 20 | Manufacturing Example 21 | Manufacturing Example 22 | Manufacturing Example 23 | Manufacturing Example 24 | Manufacturing Example 25 | Manufacturing Example 26 | Manufacturing Example 27 | Manufacturing Example 28 | Manufacturing Example 29 |
| | P-16 | P-17 | P-18 | P-19 | P-20 | P-21 | P-22 | P-23 | P-24 | P-25 | P-26 | P-27 | P-28 | P-29 |
| Acid value mg KOH/g | 119 | 132 | 140 | 141 | 137 | 137 | 92 | 92 | 92 | 39 | 95 | 140 | 34 | 113 |
| Number average molecular weight Mn | 11,000 | 11,000 | 11,000 | 11,000 | 10,000 | 12,000 | 4,500 | 11,000 | 30,000 | 10,000 | 10,000 | 11,000 | 10,000 | 10,000 |

The contents of the abbreviations in Table 2 and Table 3 are as follows.

IPA: Isopropyl alcohol
HA: Hexyl alcohol
LA: Laurylamine

<Manufacturing of coated colorant>

(Example 1)

35.0 parts of C.I. Pigment Red 122 (manufactured by Clariant AG, "Toner Magenta E") as a colorant, 175.0 parts of sodium chloride, 12.25 parts of the resin (P-1), and 35.0 parts of diethylene glycol as a water-soluble solvent were put in a stainless steel gallon kneader (manufactured by INOUE MFG, INC.) and kneaded at 80°C for 3 hours. This mixture was put into 1,000 parts of water and stirred with a high speed mixer for about 1 hour while heating at about 40°C to form a slurry, filtration and washing with water were repeated to remove sodium chloride and the water-soluble solvent, and drying was performed under reduced pressure at 40°C to obtain a coated colorant.

<Manufacturing of coloring composition>

An aqueous solution of potassium hydroxide at the concentration of 10% was added to 20 parts of the obtained coated colorant so that the degree of neutralization of the acid value of the resin (P) was 100%. Next, 0.03 part of PROXEL GXL (S) (manufactured by Lonza Group) was added as a preservative, and ion exchange water was added so that the non-volatile content was 22%. Next, stirring was performed with a disper for about 1 hour while heating in an oil bath at 70°C. Next, using an ultrasonic homogenizer having the output of 600 W, treatment was performed for 5 minutes while adjusting the internal temperature to 15°C.

Next, DENACOL EX321 (epoxy group-containing compound, manufactured by Nagase ChemteX Corporation, non-volatile content 100%, epoxy equivalent 140 g/eq) as a cross-linking agent was added at room temperature (25°C) so that the molar ratio with respect to the carboxyl group of the resin (P) was 0.8 eq. Next, stirring was performed with a disper for about 1 hour while heating in an oil bath at 70°C, and adjusting was performed with ion exchange water so that the non-volatile content was 22% to obtain a coloring composition. The obtained colorant composition was diluted 100 times with water, and when about 5 ml of the diluted solution was measured by a dynamic light scattering measurement method (where a measuring device was a Microtrac manufactured by Nikkiso Co., Ltd.), the average particle diameter (D50) was 87 nm. At this time, the average particle diameter (D50) was taken as the peak of the obtained volume particle size distribution data (histogram).

<Manufacturing of ink for ink jet recording containing coloring composition>

33.3 parts of the obtained coloring composition, 6.3 parts (3 parts as the non-volatile content) of Joncryl 780 (acrylic water-based emulsion, manufactured by BASF SE, non-volatile content 48%) as a binder resin, 16.65 parts of propylene glycol, 16.65 parts of 1,2-hexanediol, and 0.1 parts of Surfynol DF110D (manufactured by Air Products Japan, Inc.) as a leveling agent were mixed and adjusted with ion exchange water so that the total was 100 parts to manufacture an ink for ink jet recording.

(Examples 2 to 148 and Comparative Examples 1 to 8)

A coated colorant, a coloring composition, and an ink for ink jet recording were obtained in the same manner as in Example 1 except that the colorant, resin (P), and binder used were changed according to Tables 4 to 7.

The abbreviations in Tables 4 to 7 are described below.

- PR150 (C.I. Pigment Red 150, manufactured by TOKYO SHIKIZAI INDUSTRY CO., LTD., "TOSHIKI RED 150 TR")
- PR254 (C.I. Pigment Red 254, manufactured by CINIC, "CINILEX DPP RED SR2P"
- PG7 (C.I. Pigment Green 7, manufactured by TOYOCOLOR CO., LTD., "LIONOL GREEN 8930-1")
- PV19 (C.I. Pigment Violet 19, manufactured by Clariant Chemicals, "Ink Jet Magenta E5B 02")
- PV23 (C.I. Pigment Violet 23, manufactured by Clariant Chemicals, "HOSTAFINE VIOLET RL")
- PY74 (C.I. Pigment Yellow 74, manufactured by Clariant, "Hansa yellow 5GX 01")
- PB15:3 (C.I. Pigment Blue 15:3, manufactured by TOYOCOLOR CO., LTD., "LIONOL BLUE FG-73 51")
- PBl7 (C.I. Pigment Black 7, manufactured by Orion Engineered Carbons, "Printex 35")
- PO43 (C.I. Pigment Orange 43, manufactured by CINIC, "Cinilex DPP Orange")

- PO73 (C.I. Pigment Orange 73, manufactured by Clariant, "PV FAST ORANGE GRL")

The binder resins used in Tables 4 to 7 are as follows.

(1): Joncryl 780 (acrylic emulsion, manufactured by BASF SE, non-volatile content 48%)
(2): Vylonal MD-2000 (polyester emulsion, manufactured by TOYOBO CO., LTD., non-volatile content 40%)
(3): HYDRAN AP-40F (polyester urethane emulsion, manufactured by DIC Corporation, non-volatile content 22%)
(4): Boncoat WKA-565 (urethane acrylic emulsion, manufactured by DIC Corporation, non-volatile content 36%)

<Particle diameter stability>

The obtained ink for ink jet recording was diluted 100 times with water, and the particle diameter of about 5 ml of the diluted solution was measured by a dynamic light scattering measurement method (measuring device: Microtrac, manufactured by Nikkiso Co., Ltd.). At this time, the peak of the obtained volume particle size distribution data (histogram) was taken as (D50).
The particle size at 25°C and the particle size at 25°C after storage at 60°C for 10 days were compared to calculate the particle diameter change rate, and evaluation was performed according to the following criteria. As the particle diameter change during the process of making into an ink becomes smaller, it is evaluated to be good.

A: The particle diameter change rate was less than ± 5% (very good)
B: The particle diameter change rate was ± 5% or more and less than ± 12.5% (good)
C: The particle diameter change rate was ± 12.5% or more and less than ± 20% (no problem in practical use)
D: The particle diameter change rate was ± 20% or more (not practical)

<Viscosity stability>

The viscosity of the obtained ink for ink jet recording at 25°C and the viscosity at 25°C after storage at 60°C for 10 days were measured and evaluated by a viscosity increase rate. The measurement was performed using an E-type viscometer ("ELD-type viscometer" manufactured by TOKI SANGYO CO., LTD) under the condition of the rotation speed of 20 rpm.

B: The viscosity increase rate was less than 1.1 times (good)
C: The viscosity increase rate was 1.1 to 1.5 times (no problem in practical use)
D: The viscosity increase rate exceeded 1.5 times (not practical)

<Jetting stability>

An ink jet printer (manufactured by Seiko Epson Corporation, model number: EM-930C, piezo method) was loaded with the ink for ink jet recording obtained above, full surface printing (fine mode) was performed on 100 sheets of plain paper 4200 manufactured by Xerox Holdings Corporation, and the 100th printed article was observed to measure the number of white lines (corresponding to the number of non-jetted nozzles). Next, after performing a nozzle cleaning operation, full surface printing was performed on another 100 sheets to observe the 100th printed article again (200 sheets in total), and the number of white lines generated was measured per jetting nozzle width to evaluate jettability according to the following criteria.

B: White lines were not generated on the 100th printed article and the 200th printed article (good).
C: No white lines on the 100th printed article, and two or less white lines were generated on the 200th printed article (no problem in practical use).
D: Three or more white lines were generated on the 100th or 200th printed article (not practical).

<Gloss value>

Using the print pattern and print mode used in the jetting stability evaluation, printing was performed on coated paper (Oji Paper Co., Ltd., OK Top Coat) instead of the plain paper to measure a gloss level at 60° with a handy gloss meter (manufactured by NIPPON DENSHOKU INDUSTRIES CO., LTD., PG-II).

A: The gloss level of 45 or more (good)
B: The gloss level of less than 45 and 35 or more (good)

C: The gloss level of less than 35 to 20 or more (no problem in practical use)
D: The gloss level of less than 20 (not practical)

As the gloss level at 60° becomes higher, glossiness becomes excellent, and a printed article looks clear, which is preferable.
When the evaluation is A or B, it is suitable for the ink for ink jet recording.

<Compatibility evaluation>

A mixed aqueous solution, containing each of the resins (P) and each of the binder resins, which were used in preparing each of the inks of the examples and the comparative examples, in the same amount as the amount used in each of the inks, was cast on a glass and dried by heating at 100°C to produce a polymer film having the film thickness of 25 μm. Then, the transmittance of each of the obtained polymer films at 600 nm was measured with a spectrophotometer (U-3300 manufactured by Hitachi, Ltd.). The measured transmittance was classified as follows and used as an evaluation standard for compatibility to evaluate the compatibility with various binder resins.

B: The transmittance of 90% or more (good)

C: The transmittance of 85% or more (no problem in practical use)

D: The transmittance of less than 80% (not practical)

[Table 4]

| Table 4 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 1 | PR122 | 35.0 | P-1 | 12.25 | 90 | (1) | 3 | B | B | B | B | B |
| Example 2 | PR122 | 35.0 | P-2 | 12.25 | 85 | (1) | 3 | B | B | B | B | B |
| Example 3 | PR122 | 35.0 | P-3 | 12.25 | 86 | (1) | 3 | A | B | B | B | B |
| Example 4 | PR122 | 35.0 | P-4 | 12.25 | 88 | (1) | 3 | A | B | B | B | B |
| Example 5 | PR122 | 35.0 | P-5 | 12.25 | 86 | (1) | 3 | A | B | B | B | B |
| Example 6 | PR122 | 35.0 | P-6 | 12.25 | 83 | (1) | 3 | A | B | B | A | B |
| Example 7 | PR122 | 35.0 | P-7 | 12.25 | 91 | (1) | 3 | B | B | B | B | B |
| Example 8 | PR122 | 35.0 | P-8 | 12.25 | 87 | (1) | 3 | A | B | B | A | B |
| Example 9 | PR122 | 35.0 | P-9 | 12.25 | 86 | (1) | 3 | A | B | B | A | B |
| Example 10 | PR122 | 35.0 | P-10 | 12.25 | 85 | (1) | 3 | A | B | B | A | B |
| Example 11 | PR122 | 35.0 | P-11 | 12.25 | 95 | (1) | 3 | B | B | B | A | B |
| Example 12 | PR122 | 35.0 | P-12 | 12.25 | 85 | (1) | 3 | A | B | B | A | B |
| Example 13 | PR122 | 35.0 | P-13 | 12.25 | 89 | (1) | 3 | A | B | B | A | B |
| Example 14 | PR122 | 35.0 | P-14 | 12.25 | 88 | (1) | 3 | A | B | B | A | B |
| Example 15 | PR122 | 35.0 | P-15 | 12.25 | 86 | (1) | 3 | A | B | B | A | B |
| Example 16 | PR122 | 35.0 | P-16 | 12.25 | 86 | (1) | 3 | A | B | B | B | B |
| Example 17 | PR122 | 35.0 | P-17 | 12.25 | 90 | (1) | 3 | B | B | B | B | B |
| Example 18 | PR122 | 35.0 | P-18 | 12.25 | 93 | (1) | 3 | B | B | B | C | C |
| Example 19 | PR122 | 35.0 | P-19 | 12.25 | 94 | (1) | 3 | B | B | B | C | C |
| Example 20 | PR122 | 35.0 | P-20 | 12.25 | 91 | (1) | 3 | B | B | B | C | C |
| Example 21 | PR122 | 35.0 | P-21 | 12.25 | 91 | (1) | 3 | B | B | B | B | B |

(continued)

| Table 4 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 22 | PR122 | 35.0 | P-22 | 12.25 | 93 | (1) | 3 | B | B | B | A | B |
| Example 23 | PR122 | 35.0 | P-23 | 12.25 | 88 | (1) | 3 | A | B | B | A | B |
| Example 24 | PR122 | 35.0 | P-24 | 12.25 | 93 | (1) | 3 | B | B | B | A | B |
| Example 25 | PR122 | 35.0 | P-25 | 12.25 | 100 | (1) | 3 | C | C | c | c | B |
| Example 26 | PR122 | 35.0 | P-26 | 12.25 | 97 | (1) | 3 | A | B | B | A | B |
| Example 27 | PR122 | 35.0 | P-27 | 12.25 | 96 | (1) | 3 | B | B | B | C | C |
| Example 28 | PR150 | 35.0 | P-8 | 12.25 | 89 | (1) | 3 | A | B | B | A | B |
| Example 29 | PR254 | 35.0 | P-8 | 12.25 | 88 | (1) | 3 | A | B | B | A | B |
| Example 30 | PG7 | 35.0 | P-8 | 12.25 | 88 | (1) | 3 | A | B | B | A | B |
| Example 31 | PV19 | 35.0 | P-8 | 12.25 | 89 | (1) | 3 | A | B | B | A | B |
| Example 32 | PV23 | 35.0 | P-8 | 12.25 | 84 | (1) | 3 | A | B | B | A | B |
| Example 33 | PY74 | 35.0 | P-8 | 12.25 | 89 | (1) | 3 | A | B | B | A | B |
| Example 34 | PB15:3 | 35.0 | P-8 | 12.25 | 87 | (1) | 3 | A | B | B | A | B |
| Example 35 | PB17 | 35.0 | P-8 | 12.25 | 88 | (1) | 3 | A | B | B | A | B |
| Example 36 | PO43 | 35.0 | P-8 | 12.25 | 88 | (1) | 3 | A | B | B | A | B |
| Example 37 | PO73 | 35.0 | P-8 | 12.25 | 88 | (1) | 3 | A | B | B | A | B |
| Comparative Example 1 | PR122 | 35.0 | P-28 | 12.25 | 110 | (1) | 3 | C | D | D | D | D |
| Comparative Example 2 | PR122 | 35.0 | P-29 | 12.25 | 120 | (1) | 3 | C | D | D | D | D |

[Table 5]

| Table 5 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 38 | PR122 | 35.0 | P-1 | 12.25 | 90 | (2) | 3 | B | B | B | B | B |
| Example 39 | PR122 | 35.0 | P-2 | 12.25 | 85 | (2) | 3 | A | B | B | B | B |
| Example 40 | PR122 | 35.0 | P-3 | 12.25 | 86 | (2) | 3 | A | B | B | B | B |
| Example 41 | PR122 | 35.0 | P-4 | 12.25 | 88 | (2) | 3 | A | B | B | B | B |
| Example 42 | PR122 | 35.0 | P-5 | 12.25 | 86 | (2) | 3 | A | B | B | B | B |
| Example 43 | PR122 | 35.0 | P-6 | 12.25 | 83 | (2) | 3 | A | B | B | A | B |
| Example 44 | PR122 | 35.0 | P-7 | 12.25 | 91 | (2) | 3 | B | B | B | B | B |
| Example 45 | PR122 | 35.0 | P-8 | 12.25 | 87 | (2) | 3 | A | B | B | A | B |
| Example 46 | PR122 | 35.0 | P-9 | 12.25 | 86 | (2) | 3 | A | B | B | A | B |
| Example 47 | PR122 | 35.0 | P-10 | 12.25 | 85 | (2) | 3 | A | B | B | A | B |
| Example 48 | PR122 | 35.0 | P-11 | 12.25 | 95 | (2) | 3 | B | B | B | A | B |
| Example 49 | PR122 | 35.0 | P-12 | 12.25 | 85 | (2) | 3 | A | B | B | A | B |
| Example 50 | PR122 | 35.0 | P-13 | 12.25 | 89 | (2) | 3 | A | B | B | A | B |
| Example 51 | PR122 | 35.0 | P-14 | 12.25 | 88 | (2) | 3 | A | B | B | A | B |
| Example 52 | PR122 | 35.0 | P-15 | 12.25 | 86 | (2) | 3 | A | B | B | A | B |
| Example 53 | PR122 | 35.0 | P-16 | 12.25 | 86 | (2) | 3 | A | B | B | B | B |
| Example 54 | PR122 | 35.0 | P-17 | 12.25 | 90 | (2) | 3 | B | B | B | B | B |
| Example 55 | PR122 | 35.0 | P-18 | 12.25 | 93 | (2) | 3 | B | B | B | C | C |
| Example 56 | PR122 | 35.0 | P-19 | 12.25 | 94 | (2) | 3 | B | B | B | C | C |
| Example 57 | PR122 | 35.0 | P-20 | 12.25 | 91 | (2) | 3 | B | B | B | C | C |
| Example 58 | PR122 | 35.0 | P-21 | 12.25 | 91 | (2) | 3 | B | B | B | B | B |

(continued)

| Table 5 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 59 | PR122 | 35.0 | P-22 | 12.25 | 93 | (2) | 3 | B | B | B | A | B |
| Example 60 | PR122 | 35.0 | P-23 | 12.25 | 88 | (2) | 3 | A | B | B | A | B |
| Example 61 | PR122 | 35.0 | P-24 | 12.25 | 93 | (2) | 3 | B | B | B | A | B |
| Example 62 | PR122 | 35.0 | P-25 | 12.25 | 100 | (2) | 3 | C | C | C | C | B |
| Example 63 | PR122 | 35.0 | P-26 | 12.25 | 97 | (2) | 3 | A | B | B | A | B |
| Example 64 | PR122 | 35.0 | P-27 | 12.25 | 96 | (2) | 3 | B | B | B | C | C |
| Example 65 | PR150 | 35.0 | P-8 | 12.25 | 89 | (2) | 3 | A | B | B | A | B |
| Example 66 | PR254 | 35.0 | P-8 | 12.25 | 88 | (2) | 3 | A | B | B | A | B |
| Example 67 | PG7 | 35.0 | P-8 | 12.25 | 88 | (2) | 3 | A | B | B | A | B |
| Example 68 | PV19 | 35.0 | P-8 | 12.25 | 89 | (2) | 3 | A | B | B | A | B |
| Example 69 | PV23 | 35.0 | P-8 | 12.25 | 84 | (2) | 3 | A | B | B | A | B |
| Example 70 | PY74 | 35.0 | P-8 | 12.25 | 89 | (2) | 3 | A | B | B | A | B |
| Example 71 | PB15:3 | 35.0 | P-8 | 12.25 | 87 | (2) | 3 | A | B | B | A | B |
| Example 72 | PB17 | 35.0 | P-8 | 12.25 | 88 | (2) | 3 | A | B | B | A | B |
| Example 73 | PO43 | 35.0 | P-8 | 12.25 | 88 | (2) | 3 | A | B | B | A | B |
| Example 74 | PO73 | 35.0 | P-8 | 12.25 | 88 | (2) | 3 | A | B | B | A | B |
| Comparative Example 3 | PR122 | 35.0 | P-28 | 12.25 | 110 | (2) | 3 | C | D | D | D | D |
| Comparative Example 4 | PR122 | 35.0 | P-29 | 12.25 | 120 | (2) | 3 | C | D | D | D | D |

[Table 6]

| Table 6 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 75 | PR122 | 35.0 | P-1 | 12.25 | 90 | (3) | 3 | B | B | B | B | B |
| Example 76 | PR122 | 35.0 | P-2 | 12.25 | 85 | (3) | 3 | A | B | B | B | B |
| Example 77 | PR122 | 35.0 | P-3 | 12.25 | 86 | (3) | 3 | A | B | B | B | B |
| Example 78 | PR122 | 35.0 | P-4 | 12.25 | 88 | (3) | 3 | A | B | B | B | B |
| Example 79 | PR122 | 35.0 | P-5 | 12.25 | 86 | (3) | 3 | A | B | B | B | B |
| Example 80 | PR122 | 35.0 | P-6 | 12.25 | 83 | (3) | 3 | A | B | B | A | B |
| Example 81 | PR122 | 35.0 | P-7 | 12.25 | 91 | (3) | 3 | B | B | B | B | B |
| Example 82 | PR122 | 35.0 | P-8 | 12.25 | 87 | (3) | 3 | A | B | B | A | B |
| Example 83 | PR122 | 35.0 | P-9 | 12.25 | 86 | (3) | 3 | A | B | B | A | B |
| Example 84 | PR122 | 35.0 | P-10 | 12.25 | 85 | (3) | 3 | A | B | B | A | B |
| Example 85 | PR122 | 35.0 | P-11 | 12.25 | 95 | (3) | 3 | B | B | B | A | B |
| Example 86 | PR122 | 35.0 | P-12 | 12.25 | 85 | (3) | 3 | A | B | B | A | B |
| Example 87 | PR122 | 35.0 | P-13 | 12.25 | 89 | (3) | 3 | A | B | B | A | B |
| Example 88 | PR122 | 35.0 | P-14 | 12.25 | 88 | (3) | 3 | A | B | B | A | B |
| Example 89 | PR122 | 35.0 | P-15 | 12.25 | 86 | (3) | 3 | A | B | B | A | B |
| Example 90 | PR122 | 35.0 | P-16 | 12.25 | 86 | (3) | 3 | A | B | B | B | B |
| Example 91 | PR122 | 35.0 | P-17 | 12.25 | 90 | (3) | 3 | B | B | B | B | B |
| Example 92 | PR122 | 35.0 | P-18 | 12.25 | 93 | (3) | 3 | B | B | B | C | C |
| Example 93 | PR122 | 35.0 | P-19 | 12.25 | 94 | (3) | 3 | B | B | B | C | C |
| Example 94 | PR122 | 35.0 | P-20 | 12.25 | 91 | (3) | 3 | B | B | B | C | C |
| Example 95 | PR122 | 35.0 | P-21 | 12.25 | 91 | (3) | 3 | B | B | B | B | B |

(continued)

| Table 6 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 96 | PR122 | 35.0 | P-22 | 12.25 | 93 | (3) | 3 | B | B | B | A | B |
| Example 97 | PR122 | 35.0 | P-23 | 12.25 | 88 | (3) | 3 | A | B | B | A | B |
| Example 98 | PR122 | 35.0 | P-24 | 12.25 | 93 | (3) | 3 | B | B | B | A | B |
| Example 99 | PR122 | 35.0 | P-25 | 12.25 | 100 | (3) | 3 | C | C | C | C | B |
| Example 100 | PR122 | 35.0 | P-26 | 12.25 | 97 | (3) | 3 | A | B | B | A | B |
| Example 101 | PR122 | 35.0 | P-27 | 12.25 | 96 | (3) | 3 | B | B | B | C | C |
| Example 102 | PR150 | 35.0 | P-8 | 12.25 | 89 | (3) | 3 | A | B | B | A | B |
| Example 103 | PR254 | 35.0 | P-8 | 12.25 | 88 | (3) | 3 | A | B | B | A | B |
| Example 104 | PG7 | 35.0 | P-8 | 12.25 | 88 | (3) | 3 | A | B | B | A | B |
| Example 105 | PV19 | 35.0 | P-8 | 12.25 | 89 | (3) | 3 | A | B | B | A | B |
| Example 106 | PV23 | 35.0 | P-8 | 12.25 | 84 | (3) | 3 | A | B | B | A | B |
| Example 107 | PY74 | 35.0 | P-8 | 12.25 | 89 | (3) | 3 | A | B | B | A | B |
| Example 108 | PB15:3 | 35.0 | P-8 | 12.25 | 87 | (3) | 3 | A | B | B | A | B |
| Example 109 | PB17 | 35.0 | P-8 | 12.25 | 88 | (3) | 3 | A | B | B | A | B |
| Example 110 | PO43 | 35.0 | P-8 | 12.25 | 88 | (3) | 3 | A | B | B | A | B |
| Example 111 | PO73 | 35.0 | P-8 | 12.25 | 88 | (3) | 3 | A | B | B | A | B |
| Comparative Example 5 | PR122 | 35.0 | P-28 | 12.25 | 110 | (3) | 3 | C | D | D | D | D |
| Comparative Example 6 | PR122 | 35.0 | P-29 | 12.25 | 120 | (3) | 3 | C | D | D | D | D |

[Table 7]

| Table 7 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 112 | PR122 | 35.0 | P-1 | 12.25 | 90 | (4) | 3 | B | B | B | B | B |
| Example 113 | PR122 | 35.0 | P-2 | 12.25 | 85 | (4) | 3 | A | B | B | B | B |
| Example 114 | PR122 | 35.0 | P-3 | 12.25 | 86 | (4) | 3 | A | B | B | B | B |
| Example 115 | PR122 | 35.0 | P-4 | 12.25 | 88 | (4) | 3 | A | B | B | B | B |
| Example 116 | PR122 | 35.0 | P-5 | 12.25 | 86 | (4) | 3 | A | B | B | B | B |
| Example 117 | PR122 | 35.0 | P-6 | 12.25 | 83 | (4) | 3 | A | B | B | A | B |
| Example 118 | PR122 | 35.0 | P-7 | 12.25 | 91 | (4) | 3 | B | B | B | B | B |
| Example 119 | PR122 | 35.0 | P-8 | 12.25 | 87 | (4) | 3 | A | B | B | A | B |
| Example 120 | PR122 | 35.0 | P-9 | 12.25 | 86 | (4) | 3 | A | B | B | A | B |
| Example 121 | PR122 | 35.0 | P-10 | 12.25 | 85 | (4) | 3 | A | B | B | A | B |
| Example 122 | PR122 | 35.0 | P-11 | 12.25 | 95 | (4) | 3 | B | B | B | A | B |
| Example 123 | PR122 | 35.0 | P-12 | 12.25 | 85 | (4) | 3 | A | B | B | A | B |
| Example 124 | PR122 | 35.0 | P-13 | 12.25 | 89 | (4) | 3 | A | B | B | A | B |
| Example 125 | PR122 | 35.0 | P-14 | 12.25 | 88 | (4) | 3 | A | B | B | A | B |
| Example 126 | PR122 | 35.0 | P-15 | 12.25 | 86 | (4) | 3 | A | B | B | A | B |
| Example 127 | PR122 | 35.0 | P-16 | 12.25 | 86 | (4) | 3 | A | B | B | B | B |
| Example 128 | PR122 | 35.0 | P-17 | 12.25 | 90 | (4) | 3 | B | B | B | B | B |
| Example 129 | PR122 | 35.0 | P-18 | 12.25 | 93 | (4) | 3 | B | B | B | C | C |
| Example 130 | PR122 | 35.0 | P-19 | 12.25 | 94 | (4) | 3 | B | B | B | C | C |
| Example 131 | PR122 | 35.0 | P-20 | 12.25 | 91 | (4) | 3 | B | B | B | C | C |
| Example 132 | PR122 | 35.0 | P-21 | 12.25 | 91 | (4) | 3 | B | B | B | B | B |

(continued)

| Table 7 | Coated colorant | | | | Colorant composition | Ink for ink jet recording | | Evaluation results | | | | |
|---|---|---|---|---|---|---|---|---|---|---|---|---|
| | Colorant | | Resin (P) | | | Binder resin | | | | | | |
| | Type | Parts | Type | Parts | D50 (nm) | Type | Parts (solid content) | Particle diameter stability | Viscosity stability | Jetting stability | Gloss value | Compatibility |
| Example 133 | PR122 | 35.0 | P-22 | 12.25 | 93 | (4) | 3 | B | B | B | A | B |
| Example 134 | PR122 | 35.0 | P-23 | 12.25 | 88 | (4) | 3 | A | B | B | A | B |
| Example 135 | PR122 | 35.0 | P-24 | 12.25 | 93 | (4) | 3 | B | B | B | A | B |
| Example 136 | PR122 | 35.0 | P-25 | 12.25 | 100 | (4) | 3 | C | C | c | c | B |
| Example 137 | PR122 | 35.0 | P-26 | 12.25 | 97 | (4) | 3 | A | B | B | A | B |
| Example 138 | PR122 | 35.0 | P-27 | 12.25 | 96 | (4) | 3 | B | B | B | C | C |
| Example 139 | PR150 | 35.0 | P-8 | 12.25 | 89 | (4) | 3 | A | B | B | A | B |
| Example 140 | PR254 | 35.0 | P-8 | 12.25 | 88 | (4) | 3 | A | B | B | A | B |
| Example 141 | PG7 | 35.0 | P-8 | 12.25 | 88 | (4) | 3 | A | B | B | A | B |
| Example 142 | PV19 | 35.0 | P-8 | 12.25 | 89 | (4) | 3 | A | B | B | A | B |
| Example 143 | PV23 | 35.0 | P-8 | 12.25 | 84 | (4) | 3 | A | B | B | A | B |
| Example 144 | PY74 | 35.0 | P-8 | 12.25 | 89 | (4) | 3 | A | B | B | A | B |
| Example 145 | PB15:3 | 35.0 | P-8 | 12.25 | 87 | (4) | 3 | A | B | B | A | B |
| Example 146 | PB17 | 35.0 | P-8 | 12.25 | 88 | (4) | 3 | A | B | B | A | B |
| Example 147 | PO43 | 35.0 | P-8 | 12.25 | 88 | (4) | 3 | A | B | B | A | B |
| Example 148 | PO73 | 35.0 | P-8 | 12.25 | 88 | (4) | 3 | A | B | B | A | B |
| Comparative Example 7 | PR122 | 35.0 | P-28 | 12.25 | 110 | (4) | 3 | C | D | D | D | D |
| Comparative Example 8 | PR122 | 35.0 | P-29 | 12.25 | 120 | (4) | 3 | C | D | D | D | D |

Based on the results of Tables 4 to 7, the coated colorant of the present invention has excellent dispersion stability of the colorant, which makes compatibility with the binder excellent, and good gloss of the film.

The resin (P) has a high adsorptive capacity to the colorant since the resin (P) contains the colorant adsorption group-containing monomer unit, and more excellent dispersion stability was obtained from the excellent steric repulsion effect and the effect of improving compatibility with the binder resin due which are exerted by the (meth)allyl monomer unit in the resin (P). Inks for ink jet recording, flexographic printing inks, paints, stationery, and printing agents, which contain the coated colorant, have low viscosities and good preservation stability, which makes it possible to form a film with a good gloss value.

## Claims

**1.** A coated colorant, comprising:

a resin (P) which is coated on a surface of a colorant,
wherein the resin (P) contains a colorant adsorption group-containing monomer unit, a maleic acid (anhydride) unit, and a (meth)allyl monomer unit, and
the colorant adsorption group-containing monomer unit contains at least one of an α-olefin unit and a ring-containing monomer unit.

**2.** The coated colorant according to claim 1,
wherein the (meth)allyl monomer unit has a (poly)alkyleneoxy group.

**3.** The coated colorant according to claim 1 or 2,
wherein a number average molecular weight of the resin (P) is 2,000 to 35,000.

**4.** The coated colorant according to any one of claims 1 to 3,
wherein the maleic acid (anhydride) unit of the resin (P) has an ester binding site, an amide binding site, or an imide binding site.

**5.** The coated colorant according to any one of claims 1 to 4,
wherein 1 to 30 mol% of the (meth)allyl monomer unit is contained in all the units of the resin (P).

**6.** A coloring composition comprising:

the coated colorant according to any one of claims 1 to 5; and
a cross-linking agent.

**7.** The coated colorant according to any one of claims 1 to 5,
wherein the coated colorant is used for inks for ink jet recording, flexographic printing inks, toners, paints, stationery, or printing agents.

**8.** A manufacturing method of a coated colorant, comprising:

a step of kneading a water-soluble solvent, a water-soluble inorganic salt, a colorant, and a resin (P) to coat a surface of the colorant with the resin (P), and then removing the water-soluble inorganic salt and the water-soluble solvent,
wherein the resin (P) contains a colorant adsorption group-containing monomer unit, a maleic acid (anhydride) unit, and a (meth)allyl monomer unit.

**9.** A manufacturing method of a coloring composition, comprising:
mixing the coated colorant obtained by the manufacturing method according to claim 8, a basic compound, and water, and then mixing a cross-linking agent to cross-link a resin (P).

**INTERNATIONAL SEARCH REPORT**

International application No. PCT/JP2020/020769

A. CLASSIFICATION OF SUBJECT MATTER

C09B 19/02(2006.01)i; C09B 29/20(2006.01)i; C09B 29/33(2006.01)i; C09B 47/04(2006.01)i; C09B 47/10(2006.01)i; C09B 48/00(2006.01)i; C09C 1/00(2006.01)i; C09C 3/10(2006.01)i; C09D 11/03(2014.01)i; C09D 11/037(2014.01)i; C09D 11/32(2014.01)i; C09B 57/00(2006.01)i; C09B 57/12(2006.01)i; C09B 67/08(2006.01)i; C09B 67/20(2006.01)i; C09B 67/46(2006.01)i

FI: C09B67/08 C; C09B67/20 H; C09B67/20 C; C09B67/46 B; C09C1/00; C09C3/10; C09D11/32; C09D11/03; C09D11/037; C09B48/00 Z; C09B29/20 Z; C09B57/00 Z; C09B47/10; C09B19/02; C09B29/33 A; C09B47/04; C09B57/12

According to International Patent Classification (IPC) or to both national classification and IPC

B. FIELDS SEARCHED

Minimum documentation searched (classification system followed by classification symbols)

C09B19/02; C09B29/20; C09B29/33; C09B47/04; C09B47/10; C09B48/00; C09C1/00; C09C3/10; C09D11/03; C09D11/037; C09D11/32; C09B57/00; C09B57/12; C09B67/08; C09B67/20; C09B67/46

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-12995 A (TAKIMOTO, Hiroshi) 15.01.2003 (2003-01-15) claim 1, paragraphs [0047]-[0048], entire text | 1-5,7<br>6,8,9 |
| A | JP 2000-194132 A (SUMITOMO CHEMICAL INDUSTRY COMPANY LIMITED) 14.07.2000 (2000-07-14) entire text | 1-9 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 July 2020 (28.07.2020) | 18 August 2020 (18.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2020/020769

C (Continuation). DOCUMENTS CONSIDERED TO BE RELEVANT

| Category* | Citation of document, with indication, where appropriate, of the relevant passages | Relevant to claim No. |
|---|---|---|
| A | JP 3-30833 A (MATSUMOTO YUSHI-SEIYAKU CO., LTD.) 08.02.1991 (1991-02-08) entire text | 1-9 |
| A | WO 2018/173901 A1 (TOYO INK SC HOLDINGS CO., LTD.) 27.09.2018 (2018-09-27) entire text | 1-9 |
| A | JP 62-235956 A (RICOH CO., LTD.) 16.10.1987 (1987-10-16) entire text | 1-9 |
| A | JP 6402435 B1 (TOYO INK SC HOLDINGS CO., LTD.) 10.10.2018 (2018-10-10) entire text | 1-9 |
| A | JP 9-104834 A (DAINIPPON INK AND CHEMICALS, INCORPORATED) 22.04.1997 (1997-04-22) entire text | 1-9 |

Form PCT/ISA/210 (continuation of second sheet) (January 2015)

**INTERNATIONAL SEARCH REPORT**
Information on patent family members

International application No.
PCT/JP2020/020769

| Patent Documents referred in the Report | Publication Date | Patent Family | Publication Date |
|---|---|---|---|
| JP 2003-12995 A | 15 Jan. 2003 | (Family: none) | |
| JP 2000-194132 A | 14 Jul. 2000 | (Family: none) | |
| JP 3-30833 A | 08 Feb. 1991 | (Family: none) | |
| WO 2018/173901 A1 | 27 Sep. 2018 | US 2020/0010709 A1<br>EP 3604454 A1<br>CN 110461952 A<br>TW 201840743 A<br>JP 2018-162430 A | |
| JP 62-235956 A | 16 Oct. 1987 | (Family: none) | |
| JP 6402435 B1 | 10 Oct. 2018 | JP 2019-119763 A | |
| JP 9-104834 A | 22 Apr. 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11246813 A
- JP H01000109 A